# EUROPEAN PATENT APPLICATION

(11) **EP 4 582 924 A1**
(43) Date of publication of application: **09.07.2025**
(21) Application number: 23877594.4
(22) Date of filing: 05.10.2023
(51) Int. Cl.: G06F 3/14, H04W 4/80, H04N 21/436, H04N 21/43, G06F 3/04817, G06F 3/04842, H04N 21/462

(54) **MIRRORING DEVICE AND OPERATING METHOD THEREOF**

(30) Priority: 09.10.2022 KR 20220129259; 21.11.2022 KR 20220156839
(71) Applicant: Samsung Electronics Co., Ltd., Suwon-si, Gyeonggi-do 16677 (KR)
(72) Inventor: LEE, Kyungryol, Suwon-si Gyeonggi-do 16677 (KR); YANG, Jiyong, Suwon-si Gyeonggi-do 16677 (KR); JWA, Hodong, Suwon-si Gyeonggi-do 16677 (KR); KIM, Hakjoo, Suwon-si Gyeonggi-do 16677 (KR); PARK, Sangho, Suwon-si Gyeonggi-do 16677 (KR); CHOI, Areum, Suwon-si Gyeonggi-do 16677 (KR); LEE, Sungjun, Suwon-si Gyeonggi-do 16677 (KR)
(74) Representative: HGF
(86) International application number: PCT/KR2023/015352
(87) International publication number: WO 2024/080666

(57) **Abstract**

The disclosure relates to a mirroring device which mirrors an application execution screen in an electronic device, and an operating method thereof. To this end, the electronic device may detect a resize event for requesting a size change of a mirroring screen and obtain at least one of a target resolution or a target DPI to change the size of the mirroring screen. The electronic device may receive, from a source electronic device, resize mirroring data to which at least one of the target resolution or the target DPI is applied, and display a resized mirroring screen by using the resize mirroring data.

## Description

### [TECHNICAL FIELD]

The disclosure relates to a mirroring device for mirroring an app execution screen by an electronic device and an operation method thereof.

### [BACKGROUND ART]

An electronic device may install various applications (hereinafter referred to as 'app(s)') providing specific functions or services. The electronic device may execute an installed app in response to the user's request. The electronic device may display information according to the execution of an app through a display. The electronic device may be a portable electronic device such as a smartphone, a mobile phone, or a tablet device that is easy to carry by the user.

Efforts are being made to reduce the size of the portable electronic devices for easy grip and aesthetical design. Thus, the electronic device may have a relatively small display as compared to display devices, such as televisions or monitors. Electronic devices with relatively small displays may reduce user satisfaction when using multimedia content that provides video, such as movies, TV shows, or games, or when running multiple apps simultaneously.

### [DETAILED DESCRIPTION OF THE INVENTION]

### [TECHNICAL SOLUTION]

Embodiments of the disclosure may provide a mirroring device that resizes a mirroring screen for each app and an operation method thereof.

According to an embodiment, an electronic device supporting application (app) mirroring may comprise a communication unit configured to connect a communication channel with a source electronic device by at least one direct communication protocol, a display unit configured to display each of one or more mirroring images, as a mirroring screen, in an allocated mirroring area, and at least one processor electrically connected to the communication unit or the display unit, and configured to control the communication unit or the display unit to display an app screen mirrored from the source electronic device, as the mirroring screen.

According to an embodiment, in the electronic device, the at least one processor may be configured to control the display unit to display the mirroring screen using mirroring data received from the source electronic device through the communication unit, detect a resize event requesting to change a size of the mirroring screen displayed on the display unit, upon detecting the resize event, obtain at least one of a target resolution or a target dot per inch (DPI) for changing the size of the mirroring screen, receive resized mirroring data having at least one of the target resolution or the target dot per inch (DPI) from the source electronic device through the communication unit, and control the display unit to display a resized mirroring screen using the resized mirroring data.

According to an embodiment, a method for adjusting a size of a mirroring screen in an electronic device may comprise displaying a mirroring screen using mirroring data received from a source electronic device, detecting a resize event requesting to change a size of the displayed mirroring screen.

According to an embodiment, the method for adjusting the size of the mirroring screen may comprise, upon detecting the resize event, obtain at least one of a target resolution or a target dot per inch (DPI) for changing the size of the mirroring screen, receiving resized mirroring data having at least one of the target resolution or the target DPI from the source electronic device, and displaying a resized mirroring screen using the resized mirroring data.

According to an embodiment of the disclosure, it is possible to provide a user with a mirroring screen having suitable content and layout after resizing by dynamically adjusting the resolution and/or DPI of the mirroring screen considering a change in the size of a screen to be resized in an electronic device.

The technical objects of the disclosure are not limited to the foregoing, and other technical objects may be derived by one of ordinary skill in the art from example embodiments of the disclosure.

Effects of the present invention are not limited to the foregoing, and other unmentioned effects would be apparent to one of ordinary skill in the art from the following description. In other words, unintended effects in practicing embodiments of the disclosure may also be derived by one of ordinary skill in the art from example embodiments of the disclosure.

### [BRIEF DESCRIPTION OF DRAWINGS]

FIG. 1 is a view conceptually illustrating a mirroring function performed in a mirroring system according to an embodiment.
FIG. 2 is a view illustrating a procedure for providing a mirroring function in a mirroring system according to an embodiment.
FIG. 3 is a view illustrating an example of resizing a mirroring screen for each app in an external electronic device of a mirroring system according to an embodiment.
FIG. 4 is a view illustrating a signal processing procedure for providing a mirroring function in a mirroring system according to an embodiment.
FIG. 5 is a view illustrating signal processing to allow a resolution and/or DPI of a mirroring screen for resizing to be determined by an external electronic device in a mirroring system according to an embodiment.
FIGS. 6A and 6B are flowcharts illustrating control for adjusting a size of a mirroring screen in a source electronic device according to an embodiment.
FIGS. 7A and 7B are flowcharts illustrating control for adjusting a size of a mirroring screen in an external electronic device according to an embodiment.
FIG. 8 is a view illustrating signal processing to allow a resolution and/or DPI of a mirroring screen for resizing to be determined by a source electronic device in a mirroring system according to an embodiment.
FIGS. 9A and 9B are flowcharts illustrating control for adjusting a size of a mirroring screen in a source electronic device according to an embodiment.
FIGS. 10A and 10B are flowcharts illustrating control for adjusting a size of a mirroring screen in an external electronic device according to an embodiment.
FIG. 11 is a view illustrating a configuration of a source electronic device according to an embodiment.
FIG. 12 is a view illustrating a configuration of an external electronic device according to an embodiment.
FIG. 13 is a view illustrating a functional configuration of a source device for changing a size of a mirroring screen according to an embodiment.
FIG. 14 is a view illustrating a functional configuration of an external device for changing a size of a mirroring screen according to an embodiment.
FIG. 15 is a view illustrating an example of determining whether a mirroring screen needs to be resized in an external electronic device according to an embodiment.
FIG. 16 is a flowchart illustrating control for determining a target resolution and/or a target DPI in a source electronic device or an external electronic device according to an embodiment.
FIG. 17 is a view illustrating an example in which a mirroring image is damaged due to adjustment of a screen size in a mirroring system.
FIG. 18 is a flowchart illustrating control for determining a target resolution and/or a target DPI in a source electronic device or an external electronic device according to an embodiment.
FIGS. 19A, 19B, and 19C are views illustrating examples of a mirroring screen that may be configured for pre-set suggested in FIG. 18 for a search app.
FIGS. 20A, 20B, and 20C are views illustrating examples of a mirroring screen that may be configured for pre-set suggested in FIG. 18 for an app providing video content.
FIG. 21 is a block diagram illustrating an electronic device in a network environment according to various embodiments.

In connection with the description of the drawings, the same or similar reference numerals may be used to denote the same or similar elements.

### [MODE FOR CARRYING OUT THE INVENTION]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

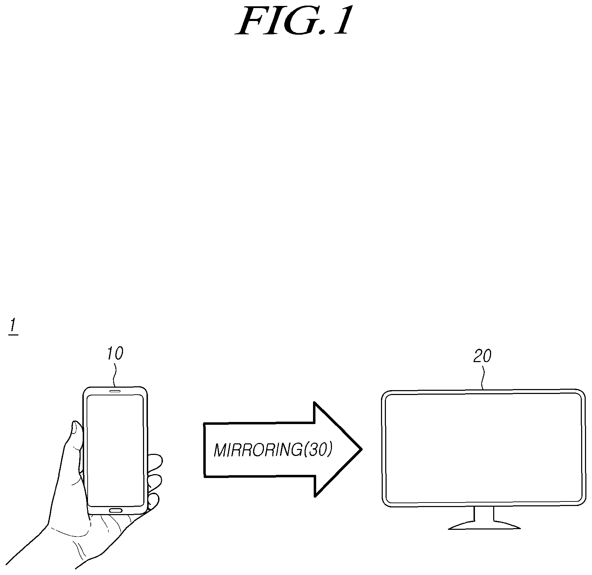

FIG. 1 is a view conceptually illustrating a mirroring function performed in a mirroring system 1 according to an embodiment.

Referring to FIG. 1, a mirroring system 1 may include at least two electronic devices. For example, the mirroring system 1 may include at least one first electronic device and at least one second electronic device. The first electronic device may be a source electronic device 10 that generates a mirroring screen for mirroring the app screen 30 and supplies mirroring data for the mirroring screen. The second electronic device may be an external electronic device 20 that requests mirroring for one or more apps and outputs a mirroring screen for each app by mirroring data supplied by the source electronic device 10 in response to the request. The source electronic device 10 may be, e.g., an electronic device such as a smartphone or a tablet PC capable of installing or executing (launching) a program such as an app. The external electronic device 20 may be, e.g., an electronic device such as a television or a personal computer having its own display. In the following description, an electronic device that provides a mirroring screen is referred to as a first electronic device 10 or a source electronic device 10, and an electronic device that receives a mirroring screen and outputs it through a display is referred to as a second electronic device 20 or an external electronic device 20.

The mirroring system 1 may mirror (30) the app screen according to the execution of at least one target app requested to be mirrored to the external electronic device 20, and in response thereto, the external electronic device 20 may display a mirroring screen for each target app on the display.

The source electronic device 10 and the external electronic device 20 included in the mirroring system 1 may be connected (hereinafter referred to as a "mirroring channel") using a predefined mirroring scheme (e.g., a wired mirroring scheme or a wireless mirroring scheme). The mirroring scheme may be classified into, e.g., a wired mirroring scheme or a wireless mirroring scheme according to the type of resource to allocate the mirroring channel. A wired mirroring scheme of physically directly connecting the communication port provided in the source electronic device 10 and the communication port provided in the external electronic device 20 using a wired cable (e.g., an HDMI cable) may be applied to the mirroring system 1. A wireless mirroring scheme in which the source electronic device 10 and the external electronic device 20 are connected using a direct communication (e.g., Wi-Fi direct) protocol may be applied to the mirroring system 1. For convenience of description below, the mirroring scheme applied to the mirroring system 1 will not be divided into a wired mirroring scheme or a wireless mirroring scheme, but they will be collectively referred to as a mirroring scheme. Meanwhile, the embodiments proposed in the disclosure may be applied in the same manner regardless of the mirroring scheme applied to the mirroring system 1.

In the mirroring system 1, the source electronic device 10 may dynamically adjust the resolution and/or DPI of the mirroring screen to be mirrored to the external electronic device 200 considering characteristics such as display performance of the external electronic device 20, the size of the mirroring screen, or the type of target app to provide the mirroring screen. The display performance may include capability information about the display, such as the resolution and/or DPI that the display of the external electronic device 20 may support. The display performance may include, e.g., capability information about the mirroring screen, such as the supported resolution or supported DPI of the external electronic device 20. In the external electronic device 20, the size of the mirroring screen may be adjusted. The adjustment of the size of the mirroring screen may occur for various reasons including user manipulation. This is described below in detail.

According to an example, the external electronic device 20 may request the source electronic device 10 to execute one or more apps for the mirroring 30. The external electronic device 20 may transfer app information (e.g., app identifier) to be mirrored and/or mirroring screen configuration information to the source electronic device 10. The app information may include an app identifier indicating at least one target app to request mirroring. The mirroring screen configuration information may be prior information that the source electronic device 10 may consider to generate a mirroring screen. The mirroring screen configuration information may include, e.g., information related to the size of the mirroring screen, the resolution and/or DPI of the mirroring screen. The size of the mirroring screen or the resolution and/or DPI of the mirroring screen may be optimized considering app characteristics such as the app type (e.g., a search app, a shopping app, a video content providing app) for the mirroring 30.

The source electronic device 10 may select at least one app to mirror (30) using the app information transferred from the external electronic device 20. The source electronic device 10 may execute at least one target app based on the mirroring screen configuration information transferred from the external electronic device 20 to obtain a mirroring image for an app screen (hereinafter referred to as a "virtual app screen") generated for each app. The source electronic device 10 may generate or allocate a virtual display for each app in order to execute at least one target app. The source electronic device 10 may generate or allocate an encoder for encoding the mirroring image for each app. The source electronic device 10 may mirror (30) the mirroring image to the external electronic device 20.

The external electronic device 20 may output the mirroring image transferred by the source electronic device 10 to be visually transferred to the user. The external electronic device 20 may display a mirroring image on a mirroring area (mirroring window) allocated for each app. The mirroring area in which the mirroring image is displayed may be a mirroring screen. The mirroring area or the mirroring screen may have an independent size for each app. For example, the mirroring area or the mirroring screen may be designated to facilitate the use of the type of target app or functions provided (e.g., shopping, multimedia content provision, search). The size of the mirroring screen may be determined or have been determined by the mirroring screen configuration information transferred to the source electronic device 10 upon requesting to execute the app. Since the mirroring image may be encoded by the source electronic device 10, the external electronic device 20 may provide a decoder for decoding the encoded mirroring image.

In the mirroring system 1, if an event of adjusting the size of the mirroring screen displayed on the external electronic device 20 (hereinafter referred to as a "resize event") occurs, whether resizing is required or the resolution (hereinafter referred to as a "target resolution") and/or DPI (hereinafter referred to as a "target DPI") to be applied for resizing may be allowed to be determined by the external electronic device 20 or the source electronic device 10.

According to an example, when the external electronic device 20 determines a target resolution and/or a target DPI for adjusting the size of the mirroring screen (resizing), the external electronic device 20 may determine whether resizing of the corresponding mirroring screen is required in response to the occurrence of the resize event.

If it is determined that the resizing of the corresponding mirroring screen is not necessary, the external electronic device 20 may change the size of the corresponding mirroring screen while maintaining the existing resolution and/or DPI by applying up- or down-scaling technology. The external electronic device 20 may provide the target resolution and/or the target DPI as a database for each screen size to provide the resizing of the mirroring screen. The external electronic device 20 may provide the layout of the mirroring screen corresponding to the target resolution and/or the target DPI for each screen size as a database.

If it is determined that the resizing of the corresponding mirroring screen is required, the external electronic device 20 may determine the target resolution and/or target DPI considering the size of the mirroring screen to be adjusted. The external electronic device 20 may transfer the determined target resolution and/or target DPI to the source electronic device 10.

The source electronic device 10 may generate a resized mirroring image of a virtual app screen whose size is adjusted by reflecting the target resolution and/or target DPI. The source electronic device 10 may mirror (30) the resized mirroring image to the external electronic device 20.

The external electronic device 20 may output the resized mirroring image 30 mirrored by the source electronic device 10 through a display to be visually transferred to the user.

According to an example, when the source electronic device 10 determines the target resolution and/or the target DPI for adjusting the size of the mirroring screen, the external electronic device 20 may transfer size-related information indicating the size to be adjusted for the corresponding mirroring screen to the source electronic device 10 in response to the occurrence of the resize event.

The source electronic device 10 may determine whether the resizing of the virtual app screen of the corresponding app is required using the size-related information received from the external electronic device 20. When it is determined that the resizing of the corresponding virtual app screen is required, the source electronic device 10 may determine the target resolution and/or the target DPI considering the size of the virtual app screen to be adjusted. The source electronic device 10 may provide the target resolution and/or the target DPI as a database for each screen size to provide the resizing of the mirroring screen. The source electronic device 10 may provide the layout of the mirroring screen corresponding to the target resolution and/or the target DPI for each screen size as a database.

The source electronic device 10 may transfer the determined target resolution and/or target DPI to the external electronic device 20. The source electronic device 10 may generate a resized mirroring image of a virtual app screen reflecting the target resolution and/or target DPI and mirror 30 to the external electronic device 20.

The external electronic device 20 may visually transfer the mirroring screen whose screen size is adjusted by the resized mirroring image, mirrored (30) by the source electronic device 10, to the user.

If it is determined that the resizing of the corresponding virtual app screen is not required, the source electronic device 10 may generate a mirroring image by adjusting the size of the corresponding virtual app screen while maintaining the resolution and/or DPI by applying an up- or down-scaling technology. The source electronic device 10 may mirror (30) the mirroring image generated by up- or down-scaling to the external electronic device 20.

The external electronic device 20 may visually transfer the mirroring screen whose screen size is adjusted by the up- or down-scaled mirroring image, mirrored (30) by the source electronic device 10, to the user.

As described above, in the mirroring system 1, when the source electronic device 10 simultaneously mirrors (30) a plurality of app screens to the external electronic device 20, the screen size of each of the plurality of virtual app screens may be adjusted or changed in response to a request of the external electronic device 20. At this time, the size of the virtual app screen may be changed by dynamically adjusting the resolution and/or DPI of the virtual display operated for each app by the source electronic device 10, rather than adjusting the screen size of the virtual app screen by applying up- or down-scaling technology. In this case, as the user adjusts the size of one or more mirroring screens displayed on the external electronic device 20, the resolution and/or DPI may be dynamically adjusted by the source electronic device 10 so that the resized app screen with the changed screen size may be mirrored to the external electronic device 20.

According to an example, in the mirroring system 1, the source electronic device 10 or the external electronic device 20 may prevent a resize event from occurring or, although a resize event occurs, prevent an operation according to a scenario for size adjustment from being performed, for an app (non-resizable app) that is declared not to support resizing.

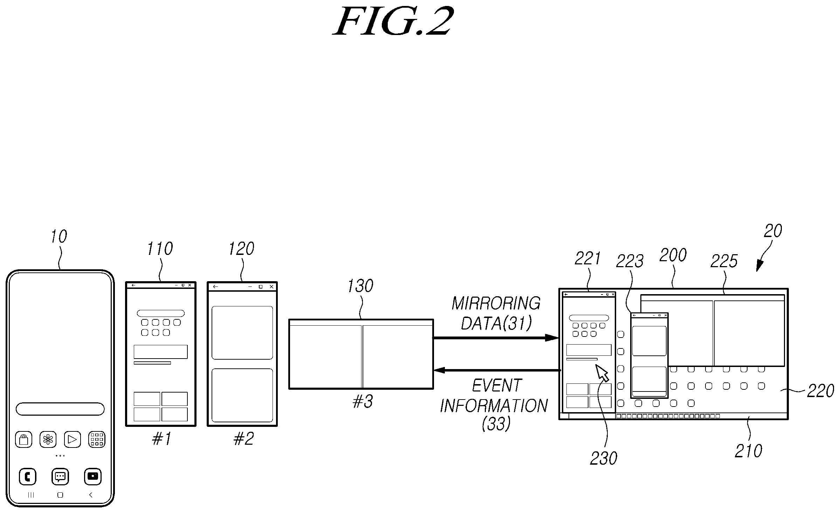

FIG. 2 is a view illustrating a procedure for providing a mirroring function in a mirroring system (e.g., the mirroring system 1 of FIG. 1) according to an embodiment.

Referring to FIG. 2, the external electronic device 20 may request the source electronic device 10 to mirror one or more apps. When the external electronic device 20 requests mirroring for the one or more apps, the external electronic device 20 may transfer display information (e.g., screen size, resolution, and/or DPI information) for displaying a mirroring screen corresponding to the corresponding app to the source electronic device 10.

For example, when the source electronic device 10 receives an app execution request from the external electronic device 20, the source electronic device 10 may execute the corresponding app to generate an app screen to be displayed on the virtual display. The source electronic device 10 may generate an app screen having the target resolution and/or the target DPI using information provided from the external electronic device 20 (hereinafter, referred to as "mirroring request information") upon the app execution request. The mirroring request information may include, e.g., app identifier, mirroring screen size, resolution, and/or DPI information. The app identifier may be an identifier indicating an app for receiving a mirroring screen. The mirroring screen size may be information indicating the size of the mirroring screen to be displayed by the external electronic device 20. The resolution information may be information indicating the target resolution of the mirroring screen to be displayed by the external electronic device 20. The DPI information may be information indicating the target DPI of the mirroring screen to be displayed by the external electronic device 20. For example, the mirroring request information may include at least one of mirroring screen size, resolution, or DPI information, and the app identifier. For example, the mirroring request information may include a combination of mirroring screen size, resolution, or DPI information, and the app identifier.

More specifically, the source electronic device 10 may provide one or more virtual displays (e.g., the first virtual display 110, the second virtual display 120, and the third virtual display 130) corresponding to each of the at least one app mirroring-requested. At least one virtual display (e.g., the first virtual display 110, the second virtual display 120, and the third virtual display 130) provided in the source electronic device 10 may correspond to an allocation area of the memory to temporarily store the mirroring image to be displayed on the mirroring screen (e.g., the first mirroring screen 221, the second mirroring screen 223, and the third mirroring screen 225) in the external electronic device 20. The source electronic device 10 may include at least one encoder (not shown) for encoding the mirroring image corresponding to each of the at least one mirroring-requested app. The virtual display (e.g., the first virtual display 110, the second virtual display 120, the third virtual display 130), and/or the encoder may correspond one-to-one to the mirroring-requested app. A virtual app screen where one corresponding app is executed may be executed on the virtual display (e.g., the first virtual display 110, the second virtual display 120, and the third virtual display 130). Accordingly, a virtual app screen according to a unique app may be executed on each of the first virtual display 110, the second virtual display 120, and the third virtual display 130.

The source electronic device 10 may generate a virtual app screen obtained through the virtual display (e.g., the first virtual display 110, the second virtual display 120, and the third virtual display 130) as a mirroring image in response to a request of the external electronic device 20. The source electronic device 10 may generate the mirroring data 31 through a unique encoding operation on the mirroring image generated for each app. The source electronic device 10 may transfer the mirroring data 31 generated for each app to the external electronic device 20. The mirroring data may include a mirroring image obtained by encoding the app screen and data (hereinafter, referred to as "mirroring metadata") to be used for mirroring the mirroring image. The mirroring metadata may include information such as the size, resolution, DPI, or display position of the mirroring image.

The source electronic device 10 may provide mirroring data 31 including a mirroring image corresponding to each of the at least one mirroring-requested apps to the external electronic device 20.

The external electronic device 20 may receive the mirroring data 31 reflecting desired display information from the source electronic device 10 in response to the request. The external electronic device 20 may output a mirroring screen (e.g., the first mirroring screen 221, the second mirroring screen 223, and the third mirroring screen 225) having a desired resolution and/or DPI for each app based on the mirroring data through the display 200. The external electronic device 20 may display the mirroring screen (e.g., the first mirroring screen 221, the second mirroring screen 223, and the third mirroring screen 225) on a basic mirroring screen 220 displayed on the display 200.

The external electronic device 20 may obtain information input (230) from the user on the mirroring screen (e.g., the first mirroring screen 221). For example, the user may generate an event using an input means such as a mouse provided in the external electronic device 20. The external electronic device 20 may generate event information 33 according to the event generated by the user and transfer it to the source electronic device 10.

The source electronic device 10 may receive the event information 33 from the external electronic device 20. The source electronic device 10 may execute a command corresponding to the event information 33 on the virtual display (e.g., the first virtual display 110) provided for the corresponding app, and generate a virtual app screen reflecting an execution result according to the command as a mirroring image. The source electronic device 10 may generate mirroring data 31 through a unique encoding operation on the corresponding app. The source electronic device 10 may transfer the generated mirroring data 31 to the external electronic device 20.

The external electronic device 20 may receive the mirroring data 31 reflecting a result of processing an event according to the user's input from the source electronic device 10. The external electronic device 20 may output a mirroring screen (e.g., the first mirroring screen 221) of an app where the user's input event occurs based on the mirroring data through the display 200.

According to an example, if a resize event for size adjustment (resizing) of at least one mirroring screen occurs by the user, the external electronic device 20 may determine the target resolution and/or the target DPI for the target app for the resized mirroring screen. If resize events simultaneously occur for a plurality of mirroring screens, the external electronic device 20 may determine the target resolution and/or the target DPI for each target app corresponding to each of the plurality of mirroring screens.

The external electronic device 20 may transfer resize information (or display information) such as the target resolution and/or target DPI determined according to the occurrence of the resize event, as event information 33, to the source electronic device 10. The event information 33 may include an app identifier indicating one or more apps where a resize event has occurred. For example, if a resize event for a plurality of mirroring screens occurs at the same time, the external electronic device 20 may transfer resize information corresponding to each of the plurality of mirroring screens to the source electronic device 10 as event information 33.

If the source electronic device 10 receives the event information 33 from the external electronic device 20, it may obtain resize information corresponding to at least one mirroring screen from the event information 33. The source electronic device 10 may obtain an app identifier indicating one or more target apps where a resize event has occurred from the event information 33.

The source electronic device 10 may generate a virtual app screen for one or more target apps indicated by the app identifier by reflecting the resize information (e.g., target resolution and/or target DPI information). The source electronic device 10 may configure the mirroring data 31 by a resized mirroring image corresponding to the virtual app screen. The source electronic device 10 may transfer the mirroring data 31 to the external electronic device 20.

The external electronic device 20 may obtain a resizing mirroring image for one or more target apps from the mirroring data 31 transferred by the source electronic device 10. The external electronic device 20 may change the size of the mirroring screen for the one or more target apps using the obtained resizing mirroring image.

According to an example, if a resize event for adjusting the size of at least one mirroring screen occurs by the user, the external electronic device 20 may transfer size-related information indicating the size to be adjusted for the corresponding mirroring screen, as event information 33, to the source electronic device 10.

The source electronic device 10 may receive event information 33 about one or more target apps from the external electronic device 20. The source electronic device 10 may obtain size-related information corresponding to one or more target apps corresponding to the mirroring screen where the resized event has occurred from the event information 33. The source electronic device 10 may determine the target resolution and/or the target DPI to change the size of the mirroring screen for the one or more target apps using the obtained size-related information. If the source electronic device 10 receives the size-related information corresponding to a plurality of mirroring screens from the external electronic device 20, the target resolution and/or the target DPI may be determined for each app corresponding to each of the plurality of mirroring screens.

The source electronic device 10 may transfer resize information (or display information) such as the target resolution and/or the target DPI determined for one or more target apps for which screen size adjustment is requested to the external electronic device 20.

The source electronic device 10 may generate a virtual app screen corresponding to each target app by reflecting the target resolution and/or target DPI information determined for each of one or more target apps. The source electronic device 10 may configure the mirroring data 31 by the resized mirroring image on the virtual app screen generated for each target app. The source electronic device 10 may transfer the mirroring data 31 to the external electronic device 20.

The external electronic device 20 may obtain the target resolution and/or the target DPI for each target app from the resize information transferred by the source electronic device 10. The external electronic device 20 may obtain a resized mirroring image for each target app from the mirroring data 31 transferred by the source electronic device 10. The external electronic device 20 may visually transfer the resized mirroring screen whose screen size is adjusted corresponding to each target app to the user using the target resolution and/or target DPI obtained for each app and the resized mirroring image obtained for each target app.

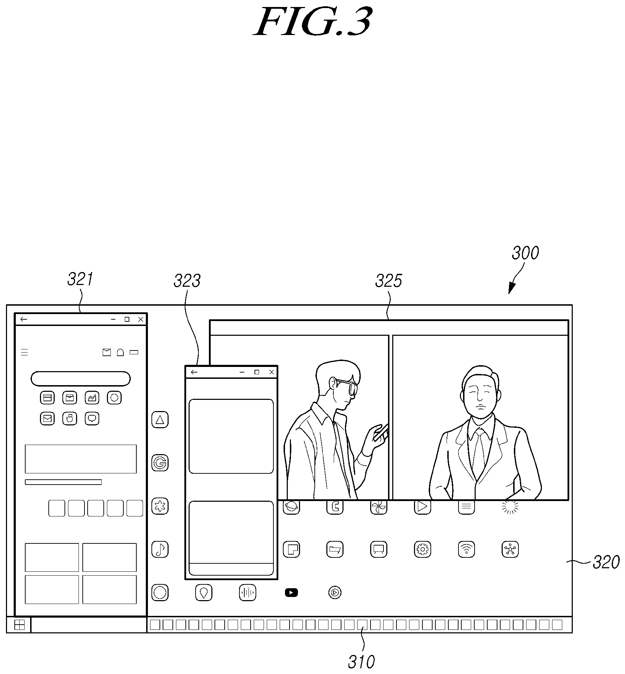

FIG. 3 is a view illustrating an example of resizing a mirroring screen for each app in an external electronic device (e.g., the external electronic device 20 of FIG. 1) of a mirroring system (e.g., the mirroring system 1 of FIG. 1) according to an embodiment.

Referring to FIG. 3, as the mirroring function is activated, the external electronic device 20 may display a mirroring initial screen 320 (e.g., the basic mirroring screen 220 of FIG. 2) on the display 300 using initial mirroring data provided from the source electronic device (e.g., the source electronic device 10 of FIG. 1). The mirroring initial screen 320 may include, e.g., icons of apps available in the source electronic device 10. The mirroring initial screen 320 may include one or more function buttons to use a mirroring function. The function button may include, e.g., a screen switching button for switching the main screen on which icons are displayed or a setting button for setting a basic function for mirroring.

According to an example, the mirroring initial screen 320 displayed on the display 300 may correspond to the basic screen where the source electronic device 10 generates one virtual display and icons of apps are disposed on the virtual display. To that end, the source electronic device 10 may transfer mirroring data prepared by encoding (e.g., video encoding) the basic screen displayed on the virtual display to the external electronic device 20.

For example, a task bar 310 may be displayed at a lower end of the display 300 of the external electronic device 20. One or more icons (e.g., shortcuts) may be disposed on the task bar 310 displayed at the lower end of the display 300. One or more icons disposed on the task bar 310 may be selected by the user's touch or pressing.

According to an example, the external electronic device 20 may receive a screen on which an app corresponding to an icon selected by the user is executed as a mirroring screen from the source electronic device 10. The icon selected by the user may be, e.g., one of the icons included in the mirroring initial screen 320. The icon selected by the user may be, e.g., one of the icons disposed on the task bar 310. The mirroring screen may be, e.g., video-encoded by the source electronic device 10 and then included and provided in the mirroring data. The external electronic device 20 may decode the encoded mirroring screen included in the mirroring data received from the source electronic device 10 and then display the same in an area (e.g., a mirroring area) allocated in the display 300.

The external electronic device 20 may display one or more mirroring screens on the display 300. For example, three mirroring screens 321, 323, and 325 (e.g., the first mirroring screen 221, the second mirroring screen 223, and the third mirroring screen 225 of FIG. 2) are displayed on the display 300.

More specifically, the user may select three icons on the mirroring initial screen 320 or the task bar 310 displayed on the display 300. Information (e.g., the identifier of the icon) about the three icons selected by the user may be transferred to the source electronic device 10 by the external electronic device 20. The source electronic device 10 may execute each of the apps corresponding to the three icons on a virtual display (e.g., the first virtual display 110, the second virtual display 120, and the third virtual display 130 of FIG. 2). The source electronic device 10 may provide three app screens that may be obtained by executing a corresponding app on each virtual display to the external electronic device 20. The external electronic device 20 may display, on the display 300, three app screens provided from the source electronic device 10, as mirroring screens 321, 323, and 325 for each app, corresponding to the selected three icons. In conclusion, the three mirroring screens 321, 323, and 325 may be displayed on the pre-displayed mirroring initial screen 320 on the display 300.

For example, the three mirroring screens 321, 323, and 325 displayed on the display 300 of the external electronic device 20 may be a first mirroring screen 321 on which a search app (e.g., a Naver app) is executed, a second mirroring screen 323 on which a store app (e.g., a Play store app) is executed, or a third mirroring screen 325 on which an app providing video content (e.g., a YouTube app) is executed. It may be identified that the three icons selected by the user are an icon of a search app, an icon of a store app, or an icon of an app providing video content.

According to an example, the first mirroring screen 321, the second mirroring screen 323, or the third mirroring screen 325 displayed on the display 300 may have a different optimal screen size. In the first mirroring screen 321, the height of the screen is resized to the maximum height, and an amount of content, similar to that of a screen where an app is executed on an electronic device (e.g., a tablet PC) having a 10-inch resolution is displayed. On the second mirroring screen 323, an amount of content similar to that of a screen on which an app is executed on a mobile electronic device (e.g., a smart phone) is displayed. On the third mirroring screen 325, an amount of content similar to that of a screen on which an app is executed on an electronic device (e.g., a tablet PC) with an 8-inch resolution is displayed.

As described above, it may be identified that the target resolution and/or target DPI for the mirroring screen is affected by, e.g., the size of the mirroring screen. For example, in order to keep the sharpness of the mirroring screen to be provided to the user constant, as the size of the mirroring screen increases, a mirroring image with a relatively high resolution and/or DPI may be required and, as the size of the mirroring screen decreases, a mirroring image with a lower resolution and/or DPI may be required.

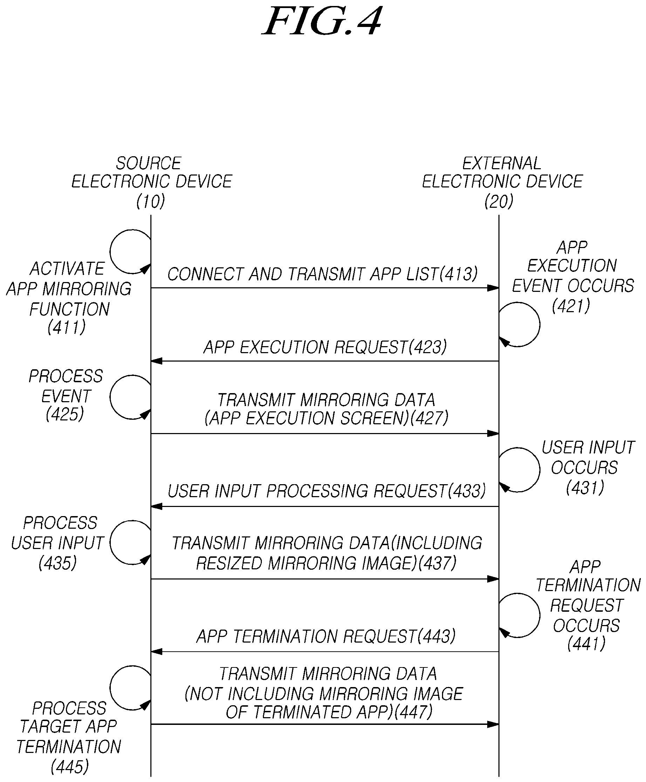

FIG. 4 is a view illustrating a signal processing procedure for providing a mirroring function in a mirroring system (e.g., the mirroring system 1 of FIG. 1) according to an embodiment.

Referring to FIG. 4, the source electronic device 10 may activate an app mirroring function in operation 411. The app mirroring function may be activated by, e.g., the user manipulating a menu or icon provided on the display (e.g., the display 200 of FIG. 2) of the source electronic device 10.

If the app mirroring function is activated, the source electronic device 10 may connect a mirroring channel with an external electronic device 20 using a predefined mirroring scheme (e.g., a wired mirroring scheme or a wireless mirroring scheme) in operation 413. The source electronic device 10 may transfer its app list to the external electronic device 20 through a mirroring channel. The app list may be a list of the apps installed in the source electronic device 10. The list may be a set of identifiers indicating corresponding apps. The app list may include two-dimensional (2D) apps, three-dimensional (3D) widget apps, or 3D immersive apps. The 2D app may be an app that provides a flat image. The 3D widget apps may be 3D apps that may be arranged in a processed space (AR space, VR space, or extended reality space). The 3D immersive app may be a 3D app capable of controlling the entire processed space (AR space, VR space, and extended reality space).

According to an example, the source electronic device 10 may generate an initial mirroring image. The initial mirroring image may include icons of apps capable of providing mirroring of an app screen to the external electronic device 20. The source electronic device 10 may encode the initial mirroring image. The source electronic device 10 may provide mirroring data (e.g., the mirroring data 31 of FIG. 2) including the encoded initial mirroring image to the external electronic device 20.

In operation 413, the external electronic device 20 may connect a mirroring channel with the source electronic device 10 using a predefined mirroring scheme (e.g., a wired mirroring scheme or a wireless mirroring scheme). The external electronic device 20 may receive an app list from the source electronic device 10 through the mirroring channel. The external electronic device 20 may obtain mirrorable app information from the app list.

For example, the external electronic device 20 may receive the initial mirroring data (e.g., the mirroring data 31 of FIG. 2) from the source electronic device 10. The external electronic device 20 may decode the encoded initial mirroring image included in the initial mirroring data 31. The external electronic device 20 may display the decoded initial mirroring image, as an initial mirroring screen (e.g., the basic mirroring screen 220 of FIG. 2 or the mirroring initial screen 320 of FIG. 3), on the whole or part of the mirroring display area provided on the display (e.g., the display 200 of FIG. 2 or the display 300 of FIG. 3). The initial mirroring screen 220 or 320 may include menu items such as icons of apps executable by the source electronic device 10. The mirroring initial screen 320 may include one or more function buttons to use the mirroring function. The function button may include, e.g., a screen switching button for switching the main screen on which icons are displayed or a menu button for setting a basic function for mirroring.

In operation 421, the external electronic device 20 may identify whether an app execution event occurs. For example, the external electronic device 20 may recognize that an app execution event has occurred by selecting at least one icon among icons included in the initial mirroring screen 220 or 320. If the app execution event occurs, the external electronic device 20 may transfer an app execution request message to the source electronic device 10 in operation 423. The app execution request message may include information (e.g., an app identifier) about an app corresponding to an icon selected by the user. Transferring the app identifier is, e.g., to enable the source electronic device 10 to recognize an app to provide a mirroring screen. The app execution request message may include display information (e.g., mirroring screen size information, resolution, and/or DPI information) to display the mirroring screen for the corresponding app.

In operation 423, the source electronic device 10 may receive the app execution request message from the external electronic device 20. If the app execution request message is received, the source electronic device 10 may perform an event processing operation according to the app execution request of the external electronic device 20 in operation 425.

More specifically, the source electronic device 10 may obtain the app identifier included in the app execution request message. The source electronic device 10 may obtain display information (e.g., mirroring screen size information, resolution, and/or DPI information) included in the app execution request message.

The source electronic device 10 may generate an encoder and/or a virtual display for each of one or more apps obtained from the app execution request message. The source electronic device 10 may generate a plurality of virtual displays (e.g., the first virtual display 110, the second virtual display 120, and/or the third virtual display 130 of FIG. 2) to execute a plurality of apps simultaneously. The source electronic device 10 may generate and operate, e.g., one to six virtual displays.

The source electronic device 10 may execute a target app on each virtual display. For example, the source electronic device 10 may execute the target app indicated by the identified app identifier on the virtual display by reflecting the obtained display information (e.g., mirroring screen size information, resolution, and/or DPI information). The source electronic device 10 may obtain mirroring data according to the virtual app screen generated by executing the target app on the virtual display. The virtual app screen may correspond to an app screen which may be displayed on the virtual display as the source electronic device 10 generates the virtual display and executes the target app. The virtual app screen may be a virtual app screen provided under the assumption that it is outputted virtually through a physical display rather than information visually provided to the user. Accordingly, the app screen may exist only as data.

The source electronic device 10 may encode image data of the virtual app screen that may be displayed on the virtual display by execution of the app, and then generate mirroring data (e.g., the mirroring data 31 of FIG. 2) and transmit it to the external electronic device 20 (operation 427).

The external electronic device 20 may receive the mirroring data 31 from the source electronic device 10 in operation 427. The external electronic device 20 may output, through the display (e.g., the display 200 of FIG. 2 or the display 300 of FIG. 3), a mirroring screen with a desired resolution and/or DPI for each app (e.g., the first mirroring screen 221, the source mirroring screen 223, or the third mirroring screen 225 of FIG. 2 or the first mirroring screen 321, the source mirroring screen 323, or the third mirroring screen 325 of FIG. 3), based on the mirroring data. The external electronic device 20 may display the mirroring screen (e.g., the first mirroring screen 221 or 321, the second mirroring screen 223 or 323, or the third mirroring screen 225 or 325) on the basic mirroring screen 220 or 320 displayed on the display 200 or 300.

In operation 431, the external electronic device 20 may monitor whether a user input occurs (e.g., the user input 230) on the mirroring screen (e.g., the first mirroring screen 221). For example, the user may generate an event using an input means such as a mouse provided in the external electronic device 20. If the external electronic device 20 recognizes that the user input has occurred, in operation 433, the external electronic device 20 may transfer event information (e.g., the event information 33 of FIG. 2) according to the event where the user input has occurred to the source electronic device 10 for a user input processing request.

In operation 433, the source electronic device 10 may receive the user input processing request message for transferring the event information 33 from the external electronic device 20. The source electronic device 10 may perform user input processing by the event information 33 in operation 435. For example, the source electronic device 10 may execute a command corresponding to the event information 33 on a virtual display (e.g., the first virtual display 110 of FIG. 2) provided for the corresponding app, and generate a virtual app screen reflecting the execution result according to the command as a mirroring image.

In operation 437, the source electronic device 10 may generate mirroring data 31 through a unique encoding operation on the corresponding app. The source electronic device 10 may transfer the generated mirroring data 31 to the external electronic device 20.

In operation 437, the external electronic device 20 may receive the mirroring data 31 reflecting a result of processing an event according to the user's input from the source electronic device 10. The external electronic device 20 may output a mirroring screen (e.g., the first mirroring screen 221) of an app where the user's input event occurs based on the mirroring data through the display 200.

According to an example, in operation 431, the external electronic device 20 may detect that a resize event occurs according to a user input for adjusting the size of at least one mirroring screen. If detecting the resize event, in operation 433, the external electronic device 20 may determine whether resizing is required, a target resolution and/or a target DPI for resizing, and transfer it to the source electronic device 10.

In operation 435, the source electronic device 10 may generate a resized mirroring image reflecting the target resolution and/or the target DPI. The source electronic device 10 may transfer the generated resized mirroring image to the external electronic device 20 in operation 437.

The external electronic device 20 may receive the resized mirroring image from the source electronic device 10 in operation 437. The external electronic device 20 may output a size-adjusted mirroring screen using the resized mirroring image.

According to an example, in operation 431, the external electronic device 20 may detect that a resize event occurs according to a user input for adjusting the size of at least one mirroring screen. If detecting the resize event, the external electronic device 20 may transfer information about the size of the mirroring screen to be adjusted through resizing to the source electronic device 10 in operation 433. The external electronic device 20 may transfer an app identifier indicating a target app corresponding to a resizing-requested mirroring to the source electronic device 10.

In operation 433, the source electronic device 10 may receive information about the size of the mirroring screen to be adjusted from the external electronic device 20. The source electronic device 10 may receive an app identifier indicating an app to adjust the screen size through resizing from the external electronic device 20.

In operation 435, the source electronic device 10 may determine the target resolution and/or the target DPI for changing the mirroring screen for one or more target apps indicated by the app identifier to a resized screen size requested by the external electronic device 20.

In operation 435, the source electronic device 10 may generate a resized mirroring image for each target app reflecting the determined target resolution and/or target DPI. In operation 437, the source electronic device 10 may transfer information about the target resolution and/or the target DPI determined for each target app and the resized mirroring image generated for each target app to the external electronic device 20. The source electronic device 10 may transfer the information about the determined target resolution and/or target DPI and the generated resized mirroring image to the external electronic device 20 by a separate operation.

In operation 437, the external electronic device 20 may receive the information about the determined target resolution and/or target DPI and the resized mirroring image from the source electronic device 10. The external electronic device 20 may output a mirroring screen size-adjusted for each target app using the determined target resolution and/or target DPI and the resized mirroring image.

In operation 441, the external electronic device 20 may determine whether an app termination event occurs according to an app termination request by the user. The app termination event may occur, e.g., when the user's input through interaction between the external electronic device 20 and the user indicates termination of mirroring.

If the app termination event occurs, the external electronic device 20 may transfer an app termination request to the source electronic device 10 in operation 443. When the app termination is requested, the external electronic device 20 may transfer the app identifier indicating the app to be requested to be terminated, together.

The source electronic device 10 may receive the app termination request from the external electronic device 20 in operation 443. If the source electronic device 10 receives the app termination request from the external electronic device 20, in operation 445, the source device 10 may terminate the corresponding app and/or the related task. The source electronic device 10 may release, e.g., a related resource for mirroring of the corresponding app requested to be terminated. The source electronic device 10 may generate a new mirroring image where the virtual app screen of the terminated app has been removed from the previous mirroring image.

In operation 447, the source electronic device 10 may transfer the updated mirroring image to the external electronic device 20 so as not to include the app screen of the terminated app.

In operation 447, the external electronic device 20 may receive the updated mirroring image from the source electronic device 10. The external electronic device 20 may output the mirroring screen using the updated mirroring image.

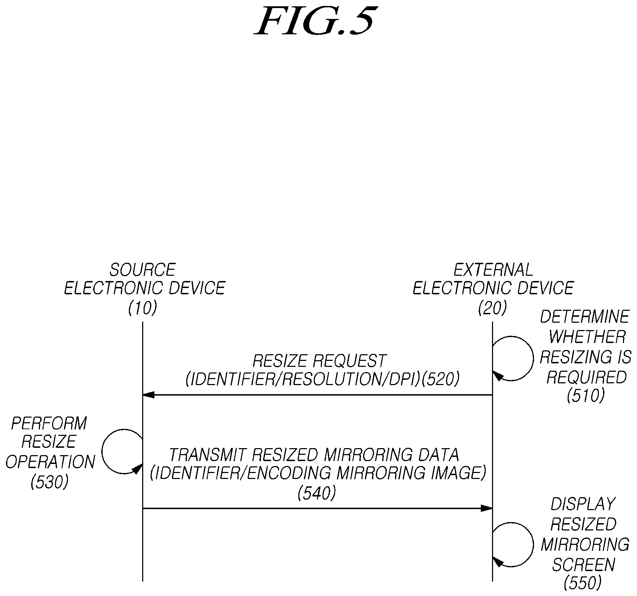

FIG. 5 is a view illustrating signal processing for determining a resolution and/or a DPI of a mirroring screen for resizing by an external electronic device (e.g., the external electronic device 20 of FIG. 1) in a mirroring system (e.g., the mirroring system 1 of FIG. 1).

Referring to FIG. 5, if a resize event for changing the size of at least one mirroring screen occurs by the user, the external electronic device 20 may determine whether the resizing of the corresponding mirroring screen is required in operation 510.

According to an example, the external electronic device 20 may provide a resize menu for requesting resizing to one or more mirroring screens (e.g., the first mirroring screen 221 or 321 of FIG. 2 or 3, the second mirroring screen 223 or 323, and the third mirroring screen 225 or 325) displayed on the display (e.g., the display 200 of FIG. 2 or the display 300 of FIG. 3). The resize menu may be provided as, e.g., an icon. If the resize menu provided on at least one mirroring screen is selected by the user, the external electronic device 20 may determine that a resize event for the corresponding mirroring screen has occurred. The user may select a desired resolution and/or DPI after activating the resize menu, for example. If the user selects the desired resolution and/or DPI, the external electronic device 20 may determine whether resizing is required by comparing the selected resolution and/or DPI with the current resolution and/or DPI of the corresponding mirroring image. For example, the external electronic device 20 may determine that resizing is required when the selected resolution and/or DPI is different from the current resolution and/or DPI of the corresponding mirroring image. For example, the external electronic device 20 may determine that resizing is required when a difference between the selected resolution and/or DPI and the current resolution and/or DPI of the corresponding mirroring image is a threshold level or more.

According to an example, the external electronic device 20 may determine that a resize event has occurred if detecting that the user artificially adjusts the size of one or more mirroring screens (e.g., the first mirroring screen 221 or 321, the second mirroring screen 223 or 323, and the third mirroring screen 225 or 325) displayed on the display (e.g., the display 200 of FIG. 2 or the display 300 of FIG. 3). The user may forcibly reduce or increase the size of at least one mirroring screen by using, e.g., a drag function by a mouse. The external electronic device 20 may determine whether resizing is required considering the variation by which the user forcibly adjusts the size. The variation may be, e.g., a variation in at least one of the height, width, or DPI of the mirroring screen (or mirroring window) or a combination by a combination of at least two thereof. For example, if a variation occurs, the external electronic device 20 may determine that resizing is required. For example, if the variation is larger than or equal to a threshold level, the external electronic device 20 may determine that resizing is required.

According to an example, the external electronic device 20 may determine that a resize event has occurred if detecting that the user artificially adjusts the size of one or more mirroring screens (e.g., the first mirroring screen 221 or 321, the second mirroring screen 223 or 323, and the third mirroring screen 225 or 325) displayed on the display (e.g., the display 200 of FIG. 2 or the display 300 of FIG. 3). The user may forcibly reduce or increase the size of at least one mirroring screen by using, e.g., a drag function by a mouse. The external electronic device 20 may determine whether resizing is required considering the size (resolution and/or DPI) of the mirroring screen forcibly adjusted by the user or a ratio of the size of the mirroring screen forcibly adjusted by the user to the entire area of the display 200 or 300. For example, the external electronic device 20 may determine that resizing is required if the adjusted size (resolution and/or DPI) of the mirroring screen exceeds or falls below a preset stepwise threshold level. For example, the external electronic device 20 may determine that resizing is required if the ratio of the adjusted size of the mirroring screen to the entire area of the display 200 or 300 exceeds or falls below the preset stepwise threshold level.

According to an example, if the external electronic device 20 detects that the display direction (e.g., landscape orientation or portrait orientation) of one or more mirroring screens (e.g., the first mirroring screen 221 or 321, the second mirroring screen 223 or 323, and the third mirroring screen 225 or 325 of FIG. 2 or 3) displayed on the display (e.g., the display 200 of FIG. 2 or the display 300 of FIG. 3) is changed, the external electronic device 20 may determine that a resize event has occurred. The external electronic device 20 may change the display direction of the mirroring screen, e.g., by the user's grip type or the user's request. The external electronic device 20 may determine whether resizing is required considering a variation in at least one of the size of the mirroring screen or the ratio of the mirroring screen to the entire area of the display 200 or 300 as the display direction of the mirroring screen is changed. For example, if the size (resolution and/or DPI) of the mirroring screen exceeds or falls below the preset stepwise threshold level as the display direction is changed, the external electronic device 20 may determine that resizing is required. For example, the external electronic device 20 may determine that resizing is required if the display direction is changed so that the ratio of the size of the mirroring screen to the entire area of the display 200 or 300 exceeds or falls below the preset stepwise threshold level.

If it is determined that resizing the mirroring screen where the resize event has occurred is required, the external electronic device 20 may determine the target resolution and/or the target DPI for the size-adjusted mirroring screen after resizing. If it is determined that resizing for a plurality of mirroring screens is required, the external electronic device 20 may determine the target resolution and/or the target DPI for each app corresponding to each of the plurality of mirroring screens.

In operation 520, the external electronic device 20 may transfer, to the source electronic device 10, a resize request message including display information about the target resolution and/or the target DPI determined for at least one mirroring screen where the resize event has occurred. The resize request message may include an app identifier indicating one or more apps where a resize event has occurred.

In operation 520, the source electronic device 10 may receive a resize request message from the external electronic device 20. The source electronic device 10 may obtain the app identifier and the display information about the target resolution, and/or the target DPI from the resize request message. The source electronic device 10 may recognize one or more apps to perform resizing by the obtained app identifier. The source electronic device 10 may determine the target resolution and/or the target DPI to be applied for resizing for each target app based on the obtained display information about the target resolution and/or the target DPI.

In operation 530, the source electronic device 10 may generate a resized virtual app screen by reflecting resize information (e.g., target resolution and/or target DPI information) for each target app. The source electronic device 10 may configure resized mirroring data (e.g., the mirroring data 31 of FIG. 2) by the app identifier indicating the target app which has been resized and the resize mirroring image corresponding to the resize virtual app screen generated for each target app. The source electronic device 10 may transfer the resized mirroring data 31 to the external electronic device 20 in operation 540.

The external electronic device 20 may receive the resized mirroring data 31 from the source electronic device 10 in operation 540. The external electronic device 20 may obtain the app identifier and the resized mirroring image from the resized mirroring data 31. The external electronic device 20 may change and display the size of the mirroring screen corresponding to one or more target apps using the obtained app identifier and resized mirroring image.

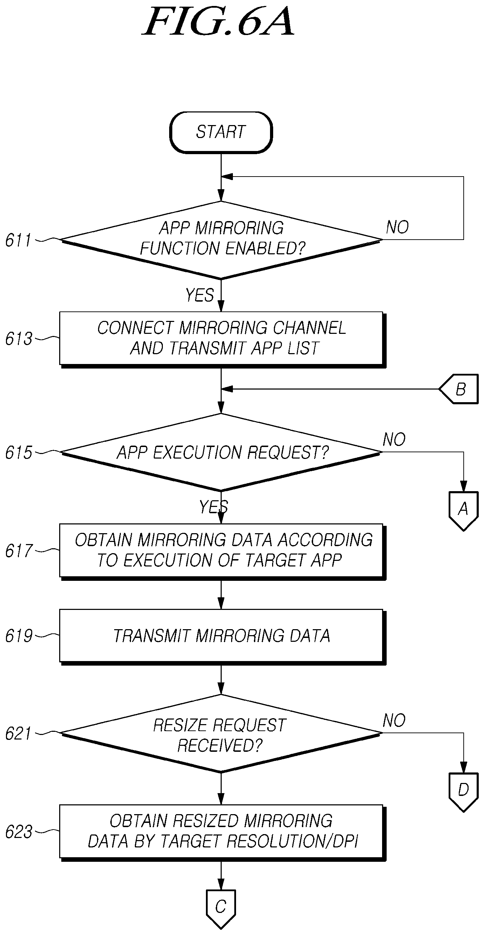

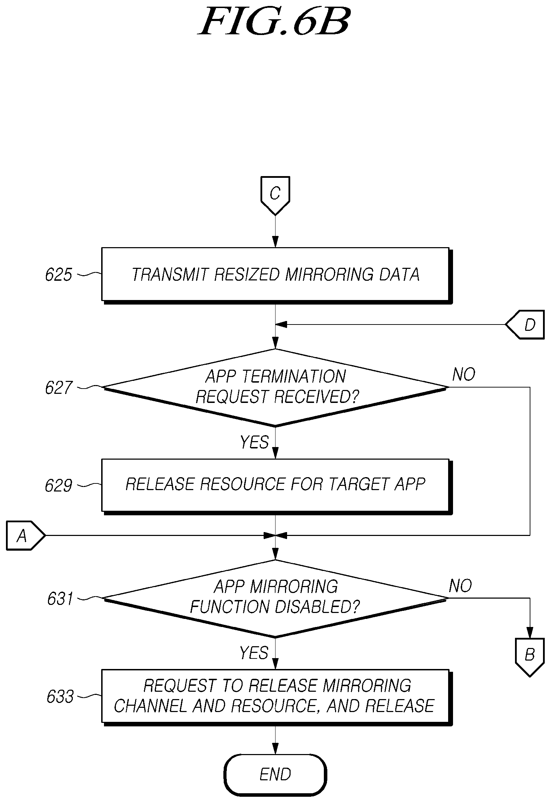

FIGS. 6A and 6B are flowcharts illustrating control for adjusting a size of a mirroring screen in a source electronic device (e.g., the source electronic device 10 of FIG. 1) according to an embodiment.

Referring to FIGS. 6A and 6B, the source electronic device 10 may determine whether the app mirroring function is activated (enabled) in operation 611. The app mirroring function may be activated, e.g., by manipulating an icon provided on the display (e.g., the display 200 of FIG. 2) of the source electronic device 10 by the user.

If the app mirroring function is activated, the source electronic device 10 may connect a mirroring channel with an external electronic device (e.g., the external electronic device 20 of FIG. 1) using a communication protocol according to a predefined mirroring scheme (e.g., a wired mirroring scheme or a wireless mirroring scheme) in operation 613. If the mirroring channel is successfully connected, the source electronic device 10 may transfer its app list to the external electronic device 20. The app list may be a list of apps installed in the source electronic device 10 and capable of mirroring an app screen to the external electronic device 20. The app list may include, e.g., 2D apps, 3D widget apps, or 3D immersive apps. The 2D app may be, e.g., an app that provides a flat image. The 3D widget app may be, e.g., a 3D app that may be arranged in a large number in a processed space (AR space, VR space, and extended reality space). The 3D immersive app may be, e.g., a 3D app capable of controlling the entire processed space (AR space, VR space, and extended reality space).

In operation 615, the source electronic device 10 may determine whether an app execution request is received from the external electronic device 20. If the source electronic device 10 receives an app execution request message from the external electronic device 20, it may be determined that an app execution request has been received.

If the app execution request is received, the source electronic device 10 may generate a virtual app screen for one or more target apps requested to be mirrored in operation 617. The virtual app screen may be encoded and then used as a mirroring image for configuring mirroring data.

More specifically, the source electronic device 10 may obtain the app identifier and display information (e.g., mirroring screen size information, resolution, and/or DPI information) from the app execution request message transferred from the external electronic device 20 for the app execution request. The app identifier may be information indicating one or more target apps desired to be mirrored. The display information may include mirroring screen size information, resolution, and/or DPI information that should be considered to generate the virtual app screen for each of one or more target apps.

The source electronic device 10 may generate a virtual display and an encoder using the resolution and/or DPI information for each target app. The source electronic device 10 may obtain a virtual app screen by executing the corresponding target app on the virtual display (e.g., the first virtual display 110, the second virtual display 120, and the third virtual display 130 of FIG. 2) generated for each target app. The source electronic device 10 may encode the mirroring image of the virtual app screen generated for each target app through the corresponding encoder. The source electronic device 10 may obtain mirroring data using the mirroring image encoded for each target app.

The source electronic device 10 may transfer the mirroring data to the external electronic device 20 through the mirroring channel in operation 619. The source electronic device 10 may include an app identifier indicating one or more target apps mirrored in the mirroring data.

In operation 621, the source electronic device 10 may determine whether resize information for a resize request is received from the external electronic device 20. The resize information for the resize request may be used to adjust the size of the app screen for one or more target apps. For example, the resize information may include an app identifier indicating one or more target apps to be resized and target resolution and/or target DPI information to be considered to adjust the size of the app screen of the one or more target apps.

If receiving the resize request, in operation 623, the app identifier, the source electronic device 10 may obtain the app identifier and the target resolution and target DPI information from the resize information. The app identifier may indicate one or more target apps desired to be resized. The target resolution and/or target DPI information may determine the size of a resize app screen for the one or more target apps.

In operation 625, the source electronic device 10 may configure resized mirroring data and transmit it to the external electronic device 20 through the mirroring channel. For example, the source electronic device 10 may change the size of the virtual display for each of one or more target apps to meet the target resolution and/or target DPI. The source electronic device 10 may discard the existing encoder generated for each of one or more target apps, and generate a new encoder capable of supporting the target resolution and/or the target DPI. The source electronic device 10 may synthesize and update a resized virtual app screen that may be output to the virtual display whose size is changed by execution of an app to be mirrored (one of the plurality of target apps). The source electronic device 10 may encode the resized mirroring image corresponding to the updated resized virtual app screen by the new encoder. The source electronic device 10 may configure resized mirroring data by the encoded resized mirroring image, and transmit the configured resized mirroring data to the external transmission device 20.

The source electronic device 10 may monitor whether an app termination request is received from the external electronic device 20 in operation 627. The app termination request may be detected by receiving an app termination message indicating that mirroring of the app screen is no longer desired for one or more apps. The app termination message may include an app identifier indicating one or more apps for which mirroring is desired to be terminated.

Upon receiving the app termination request, the source electronic device 10 may release the resource for mirroring by discarding the virtual display and encoder provided for one or more apps for which the mirroring termination is requested in operation 629.

In operation 631, the source electronic device 10 may determine whether the mirroring function is requested to be disabled. The mirroring function may be disabled, e.g., by manipulating an icon provided on the display (e.g., the display 200 of FIG. 2) of the source electronic device 10 by the user.

If the mirroring function is disabled, in operation 633, the source electronic device 10 may release the mirroring channel, and discard the virtual display and encoder provided for all target apps where mirroring was provided to release the resource for mirroring.

The source electronic device 10 may repeatedly perform the resize operation of changing the size of the app screen for the target app in response to the resize request until the mirroring function is requested to be disabled by the user.

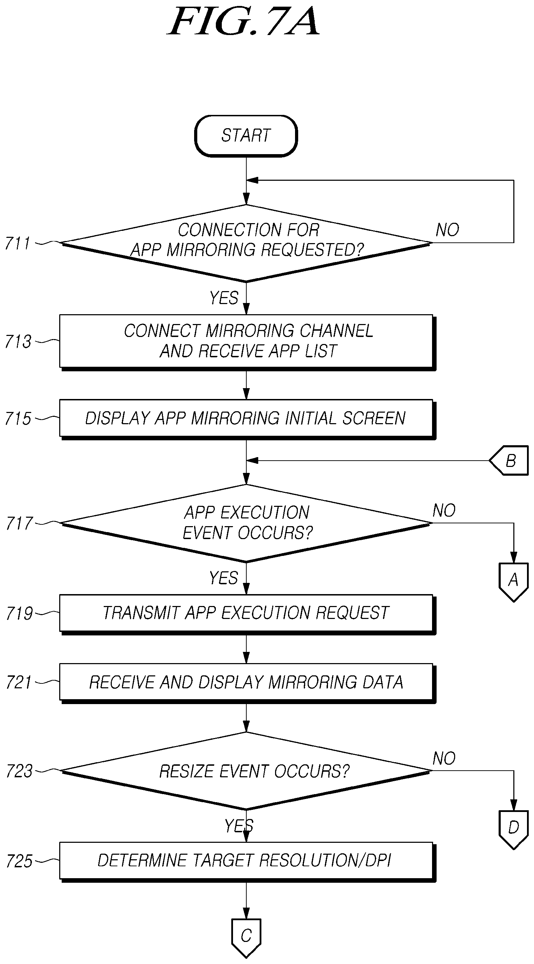

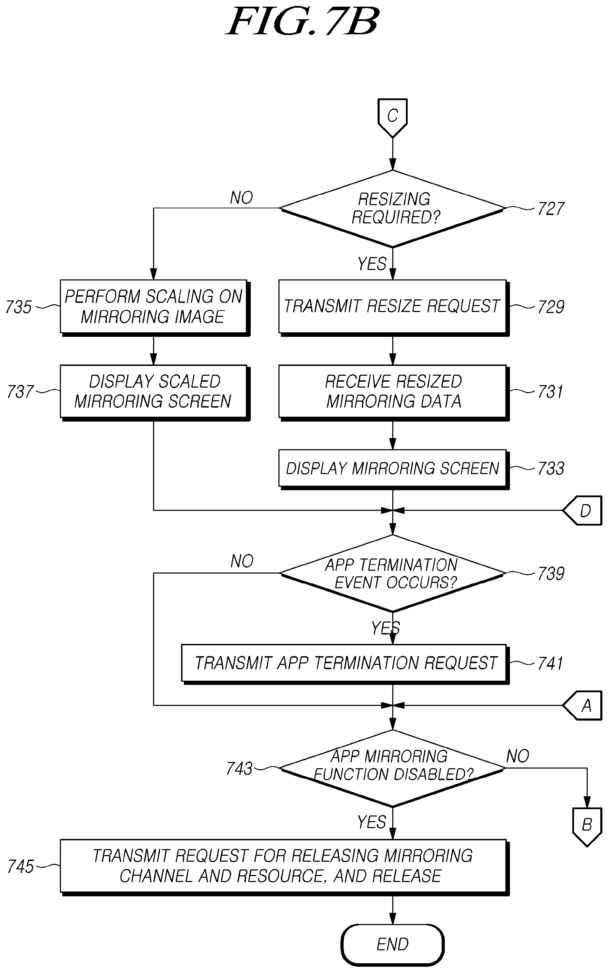

FIGS. 7A and 7B are flowcharts illustrating control for adjusting a size of a mirroring screen in an external electronic device (e.g., the external electronic device 20 of FIG. 1) according to an embodiment.

Referring to FIGS. 7A and 7B, in operation 711, the external electronic device 20 may determine whether there is a connection request for app mirroring from the source electronic device (e.g., the source electronic device 10 of FIG. 1).

If receiving a connection request for mirroring from the source electronic device 10, the external electronic device 20 may connect a mirroring channel with the source electronic device using a communication protocol according to a predefined mirroring scheme (e.g., a wired mirroring scheme or a wireless mirroring scheme) in operation 713. If the mirroring channel is successfully connected, the external electronic device 20 may receive its app list to the source electronic device 10. The app list may be a list of apps installed in the source electronic device 10 and capable of mirroring an app screen to the external electronic device 20.

In operation 715, the external electronic device 20 may display an app mirroring initial screen (e.g., the basic mirroring screen 220 of FIG. 2 or the mirroring initial screen 320 of FIG. 3) on the display (e.g., the basic mirroring screen 220 of FIG. 3 or the mirroring initial screen 320 of FIG. 3) using the initial mirroring data provided from the source electronic device 10. The app mirroring initial screen may include, e.g., icons of apps available in the source electronic device 10. The app mirroring initial screen may include one or more function buttons to use a mirroring function. The function button may include, e.g., a screen switching button for switching the main screen on which icons are displayed or a setting button for setting a basic function for mirroring.

In operation 717, the external electronic device 20 may identify whether an app execution event occurs. For example, the external electronic device 20 may recognize that an app execution event has occurred by selecting at least one icon among icons included in the initial mirroring screen 220 or 320.

If the app execution event occurs, the external electronic device 20 may transfer an app execution request message to the source electronic device 10 in operation 719. The app execution request message may include information (e.g., an app identifier) about an app corresponding to an icon selected by the user. Transferring the app identifier is, e.g., to enable the source electronic device 10 to recognize an app to provide a mirroring screen. The app execution request message may include display information (e.g., mirroring screen size information, resolution, and/or DPI information) to display the mirroring screen for the corresponding app.

The external electronic device 20 may receive the mirroring data (e.g., the mirroring data 31 of FIG. 2) from the source electronic device 10 in operation 721. The external electronic device 20 may output, through the display (e.g., the display 200 of FIG. 2 or the display 300 of FIG. 3), a mirroring screen with a desired resolution and/or DPI for each app (e.g., the first mirroring screen 221, the source mirroring screen 223, or the third mirroring screen 225 of FIG. 2 or the first mirroring screen 321, the source mirroring screen 323, or the third mirroring screen 325 of FIG. 3), based on the mirroring data 31. The external electronic device 20 may display the mirroring screen (e.g., the first mirroring screen 221 or 321, the second mirroring screen 223 or 323, or the third mirroring screen 225 or 325) on the basic mirroring screen 220 or 320 displayed on the display 200 or 300.

In operation 723, the external electronic device 20 may detect that a resize event occurs according to a user input for adjusting the size of at least one mirroring screen.

If detecting a resize event, in operation 725, the external electronic device 20 may determine the target resolution and/or the target DPI for each target app considering the screen size to adjust the mirroring screen. If resize events simultaneously occur for a plurality of mirroring screens, the external electronic device 20 may determine the target resolution and/or the target DPI corresponding to each of the plurality of mirroring screens.

In operation 727, the external electronic device 20 may determine whether resizing of the mirroring screen where the resize event has occurred is required. Examples of determining whether resizing is required by the external electronic device 20 have been described in detail in the description with reference to FIG. 5, and thus the description thereof will be omitted.

If it is determined that resizing for the mirroring screen where the resize event has occurred is not required, the external electronic device 20 may perform up- or down-scaling on the mirroring image of the target app where the resize event has occurred in operation 735. In operation 737, the external electronic device 20 may display the up- or down-scaled mirroring image as a mirroring screen of a corresponding app.

If it is determined that resizing for the mirroring screen where the resize event has occurred is required, the external electronic device 20 may transmit a resize request message requesting resizing to the source electronic device 10 in operation 729. The resize request message may include, e.g., an app identifier indicating one or more target apps to be resized and target resolution and/or target DPI information to be considered to adjust the size of the app screen of the one or more target apps.

The external electronic device 20 may receive the resized mirroring data from the source electronic device 10 in operation 731. The external electronic device 20 may obtain the app identifier and the resized mirroring image from the resized mirroring data.

In operation 733, the external electronic device 20 may change the size of the mirroring screen corresponding to one or more target apps using the obtained app identifier and resized mirroring image, and display the resized mirroring screen.

In operation 739, the external electronic device 20 may determine whether an app termination event occurs according to an app termination request by the user. The app termination event may occur, e.g., when the user's input through interaction between the external electronic device 20 and the user indicates termination of mirroring.

If an app termination event occurs, the external electronic device 20 may transfer an app termination request to the source electronic device 10 in operation 741. When the app termination is requested, the external electronic device 20 may transfer the app identifier indicating the app to be requested to be terminated, together.

In operation 743, the external electronic device 20 may determine whether the mirroring function is requested to be disabled. The request for disabling the mirroring function may be generated, e.g., by manipulating an icon provided on the display (e.g., the display 200 of FIG. 2) of the source electronic device 10 by the user.

If the mirroring function is disabled, in operation 745, the external electronic device 20 may release the mirroring channel, and release the resource for mirroring, such as discarding the decoder provided for all target apps where mirroring was provided.

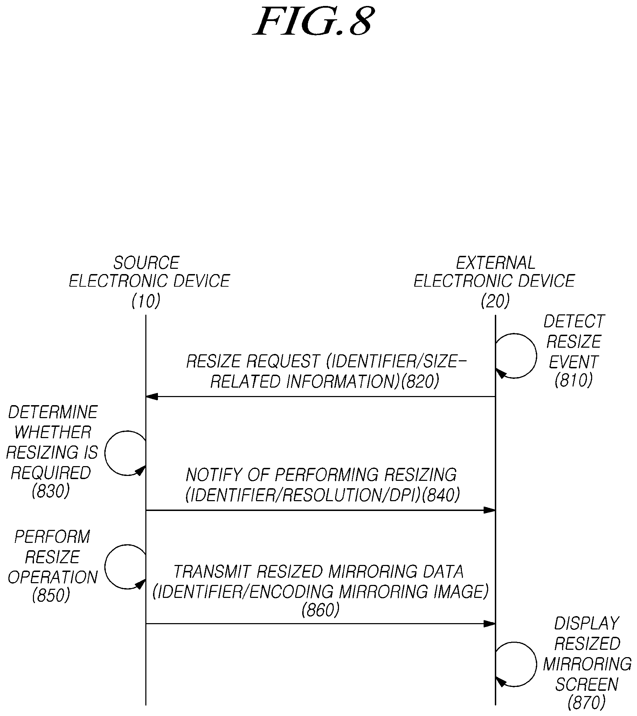

FIG. 8 is a view illustrating signal processing for determining a resolution and/or a DPI of a mirroring screen for resizing by a source electronic device (e.g., the source electronic device 10 of FIG. 1) in a mirroring system (e.g., the mirroring system 1 of FIG. 1).

Referring to FIG. 8, in operation 810, the external electronic device 20 may detect an occurrence of a resize event requesting to adjust the size of at least one mirroring screen by the user.

According to an example, the external electronic device 20 may provide a resize menu for requesting resizing to one or more mirroring screens (e.g., the first mirroring screen 221 or 321 of FIG. 2 or 3, the second mirroring screen 223 or 323, and the third mirroring screen 225 or 325) displayed on the display (e.g., the display 200 of FIG. 2 or the display 300 of FIG. 3). The resize menu may be provided as, e.g., an icon. If the resize menu provided on at least one mirroring screen is selected by the user, the external electronic device 20 may determine that a resize event for the corresponding mirroring screen has occurred. The user may select a screen size to be desired to be changed to, e.g., after activating the resize menu.

According to an example, the external electronic device 20 may determine that a resize event has occurred if detecting that the user artificially adjusts the size of one or more mirroring screens (e.g., the first mirroring screen 221 or 321, the second mirroring screen 223 or 323, and the third mirroring screen 225 or 325) displayed on the display (e.g., the display 200 of FIG. 2 or the display 300 of FIG. 3). The user may forcibly reduce or increase the size of at least one mirroring screen by using, e.g., a drag function by a mouse.

According to an example, if the external electronic device 20 detects that the display direction (e.g., landscape orientation or portrait orientation) of one or more mirroring screens (e.g., the first mirroring screen 221 or 321, the second mirroring screen 223 or 323, and the third mirroring screen 225 or 325 of FIG. 2 or 3) displayed on the display (e.g., the display 200 of FIG. 2 or the display 300 of FIG. 3) is changed, the external electronic device 20 may determine that a resize event has occurred.

If the resize event is detected, the external electronic device 20 may transmit a resize request message requesting resizing to the source electronic device 10 in operation 820. The resize request message may include, e.g., an identifier indicating one or more target apps to be resized and information related to the size to be resized for each of one or more target apps. The size-related information may differ according to the method for determining whether resizing is required.

If receiving the resize request message, the source electronic device 10 may determine whether resizing is required for one or more target apps in operation 830.

According to an example, the source electronic device 10 may determine whether resizing is required by comparing the resolution and/or DPI selected considering the screen size for resizing with the resolution and/or DPI of the corresponding mirroring image. For example, the source electronic device 10 may determine that resizing is required when the selected resolution and/or DPI is different from the current resolution and/or DPI of the corresponding mirroring image. For example, the source electronic device 10 may determine that resizing is required when a difference between the selected resolution and/or DPI and the current resolution and/or DPI of the corresponding mirroring image is a threshold level or more.

According to an example, the source electronic device 10 may determine whether resizing is required considering the variation in the screen size obtained by the resize request message. The variation may be, e.g., a variation in at least one of the height, width, or DPI of the mirroring screen (or mirroring window) or a combination by a combination of at least two thereof. For example, if a variation occurs, the source electronic device 10 may determine that resizing is required. For example, if the variation is larger than or equal to a threshold level, the source electronic device 10 may determine that resizing is required.

According to an example, the source electronic device 10 may determine whether resizing is required considering the adjusted screen size (resolution and/or DPI) obtained by the resize request message or the ratio of the adjusted screen size to the entire area of the display 200 or 300 of the external electronic device 20. For example, the source electronic device 10 may determine that resizing is required if the adjusted size (resolution and/or DPI) of the mirroring screen exceeds or falls below a preset stepwise threshold level. For example, the source electronic device 10 may determine that resizing is required if the ratio of the adjusted size of the mirroring screen to the entire area of the display 200 or 300 exceeds or falls below the preset stepwise threshold level.

According to an example, the source electronic device 10 may determine whether resizing is required considering a variation in at least one of the size of the mirroring screen or a ratio of the mirroring screen to the entire area of the display 200 or 300 due to a change in the display direction of the mirroring screen by the user's request or the user's grip on the external electronic device 20. For example, if the size (resolution and/or DPI) of the mirroring screen exceeds or falls below the preset stepwise threshold level as the display direction of the external electronic device 20 is changed, the source electronic device 10 may determine that resizing is required. For example, the source electronic device 10 may determine that resizing is required if the display direction of the external electronic device 20 is changed so that the ratio of the size of the mirroring screen to the entire area of the display 200 or 300 exceeds or falls below the preset stepwise threshold level.

If it is determined that resizing is required, the source electronic device 10 may determine the target resolution and/or the target DPI for the size-adjusted mirroring screen after resizing. If it is determined that resizing for a plurality of mirroring screens is required, the source electronic device 10 may determine the target resolution and/or the target DPI for each app corresponding to each of the plurality of mirroring screens.

The source electronic device 10 may notify the external electronic device 20 of performing resizing in operation 840. When notifying of the execution of resizing, the source electronic device 10 may transfer an identifier indicating one or more target apps to be resized and display information about the target resolution and/or the target DPI determined for the one or more target apps to the external electronic device 20.

In operation 850, the source electronic device 10 may determine the target resolution and/or the target DPI to be applied for resizing for each target app by the app identifier and target resolution and/or target DPI transferred to the external electronic device 20.

In operation 850, the source electronic device 10 may generate a resized virtual app screen by reflecting resize information (e.g., target resolution and/or target DPI information) for each target app. The source electronic device 10 may configure resized mirroring data (e.g., the mirroring data 31 of FIG. 2) by the app identifier indicating the target app which has been resized and the resize mirroring image corresponding to the resize virtual app screen generated for each target app. The source electronic device 10 may transfer the resized mirroring data 31 to the external electronic device 20 in operation 860.

The external electronic device 20 may receive the resized mirroring data 31 from the source electronic device 10 in operation 860. The external electronic device 20 may obtain the app identifier and the resized mirroring image from the resized mirroring data 31. In operation 870, the source electronic device 10 may display a resized mirroring screen obtained by changing the size of the mirroring screen corresponding to one or more target apps using the obtained app identifier and resized mirroring image.

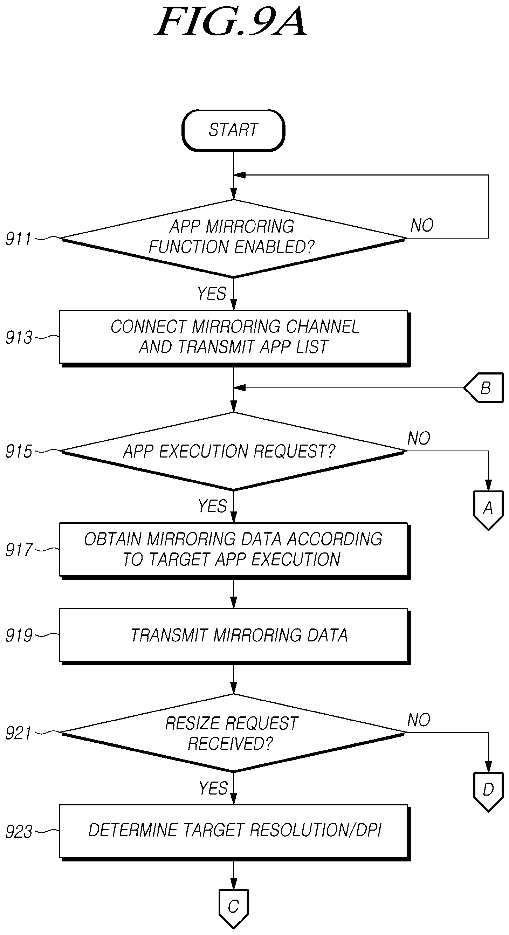

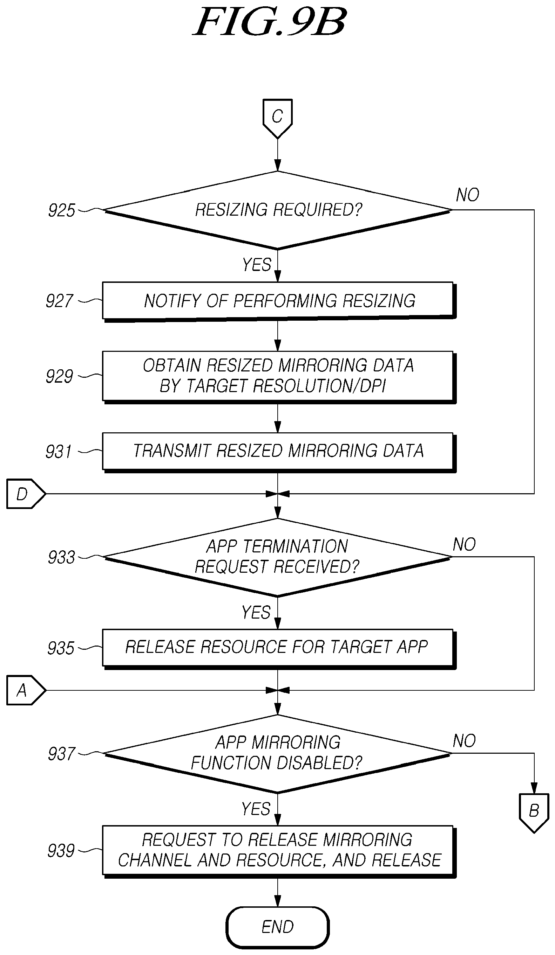

FIGS. 9A and 9B are flowcharts illustrating control for adjusting a size of a mirroring screen in a source electronic device (e.g., the source electronic device 10 of FIG. 1) according to an embodiment.

Referring to FIGS. 9A and 9B, the source electronic device 10 may determine whether the app mirroring function is enabled in operation 911. The app mirroring function may be enabled, e.g., by manipulating an icon provided on the display (e.g., the display 200 of FIG. 2) of the source electronic device 10 by the user.

If the app mirroring function is activated, the source electronic device 10 may connect a mirroring channel with an external electronic device (e.g., the external electronic device 20 of FIG. 1) using a communication protocol according to a predefined mirroring scheme (e.g., a wired mirroring scheme or a wireless mirroring scheme) in operation 913. If the mirroring channel is successfully connected, the source electronic device 10 may transfer its app list to the external electronic device 20. The app list may be a list of apps installed in the source electronic device 10 and capable of mirroring an app screen to the external electronic device 20. The app list may include, e.g., 2D apps, 3D widget apps, or 3D immersive apps. The 2D app may be, e.g., an app that provides a flat image. The 3D widget app may be, e.g., a 3D app that may be arranged in a large number in a processed space (AR space, VR space, and extended reality space). The 3D immersive app may be, e.g., a 3D app capable of controlling the entire processed space (AR space, VR space, and extended reality space).

In operation 915, the source electronic device 10 may determine whether an app execution request is received from the external electronic device 20. If the source electronic device 10 receives an app execution request message from the external electronic device 20, it may be determined that an app execution request has been received.

If the app execution request is received, the source electronic device 10 may generate a virtual app screen for one or more target apps requested to be mirrored in operation 917. The virtual app screen may be encoded and then used as a mirroring image for configuring mirroring data.

More specifically, the source electronic device 10 may obtain the app identifier and display information (e.g., mirroring screen size information, resolution, and/or DPI information) from the app execution request message transferred from the external electronic device 20 for the app execution request. The app identifier may be information indicating one or more target apps desired to be mirrored. The display information may include mirroring screen size information, resolution, and/or DPI information that should be considered to generate the virtual app screen for each of one or more target apps.

The source electronic device 10 may generate a virtual display and an encoder using the resolution and/or DPI information for each target app. The source electronic device 10 may obtain a virtual app screen by executing the corresponding target app on the virtual display (e.g., the first virtual display 110, the second virtual display 120, and the third virtual display 130 of FIG. 2) generated for each target app. The source electronic device 10 may encode the mirroring image of the virtual app screen generated for each target app through the corresponding encoder. The source electronic device 10 may obtain mirroring data using the mirroring image encoded for each target app.

The source electronic device 10 may transfer the mirroring data to the external electronic device 20 through the mirroring channel in operation 919. The source electronic device 10 may include an app identifier indicating one or more target apps mirrored in the mirroring data.

In operation 921, the source electronic device 10 may determine whether resize information for a resize request is received from the external electronic device 20. The resize information for the resize request may be used to determine the target resolution and/or the target DPI for adjusting the size of the app screen for one or more target apps. For example, the resize information may include an app identifier indicating one or more target apps to be resized and information about the size to which the app screen of the one or more target apps is to be adjusted.

The source electronic device 10 may determine the target resolution and/or the target DPI for the target mirroring screen to be resized in operation 923. If it is determined that resizing for a plurality of mirroring screens is required, the source electronic device 10 may determine the target resolution and/or the target DPI for each app corresponding to each of the plurality of mirroring screens.

The source electronic device 10 may transfer a resize execution notification message to the external electronic device 20 in operation 927. The resize execution notification message may include an identifier indicating one or more target apps to be resized. The resize execution notification message may include display information about the target resolution and/or the target DPI determined for the one or more target apps.

If it is determined that resizing is required, in operation 929, the source electronic device 10 may determine the target resolution and the target DPI to be applied for performing resizing on one or more target apps to be resized and the app screen of the one or more target apps.

In operation 931, the source electronic device 10 may configure resized mirroring data and transmit it to the external electronic device 20 through the mirroring channel. For example, the source electronic device 10 may change the size of the virtual display for each of one or more target apps to meet the target resolution and/or target DPI. The source electronic device 10 may discard the existing encoder generated for each of one or more target apps, and generate a new encoder capable of supporting the target resolution and/or the target DPI. The source electronic device 10 may synthesize and update a resized virtual app screen that may be output to the virtual display whose size is changed by execution of an app to be mirrored (one of the plurality of target apps). The source electronic device 10 may encode the resized mirroring image corresponding to the updated resized virtual app screen by the new encoder. The source electronic device 10 may configure resized mirroring data by the encoded resized mirroring image, and transmit the configured resized mirroring data to the external transmission device 20.

The source electronic device 10 may monitor whether an app termination request is received from the external electronic device 20 in operation 933. The app termination request may be detected by receiving an app termination message indicating that mirroring of the app screen is no longer desired for one or more apps. The app termination message may include an app identifier indicating one or more apps for which mirroring is desired to be terminated.

Upon receiving the app termination request, the source electronic device 10 may release the resource for mirroring by discarding the virtual display and encoder provided for one or more apps for which the mirroring termination is requested in operation 935.

In operation 937, the source electronic device 10 may determine whether the mirroring function is requested to be disabled. The mirroring function may be disabled, e.g., by manipulating an icon provided on the display (e.g., the display 200 of FIG. 2) of the source electronic device 10 by the user.

If the mirroring function is disabled, in operation 939, the source electronic device 10 may release the mirroring channel, and discard the virtual display and encoder provided for all target apps where mirroring was provided to release the resource for mirroring.

The source electronic device 10 may repeatedly perform the resize operation of changing the size of the app screen for the target app in response to the resize request until the mirroring function is requested to be disabled by the external electronic device 20.

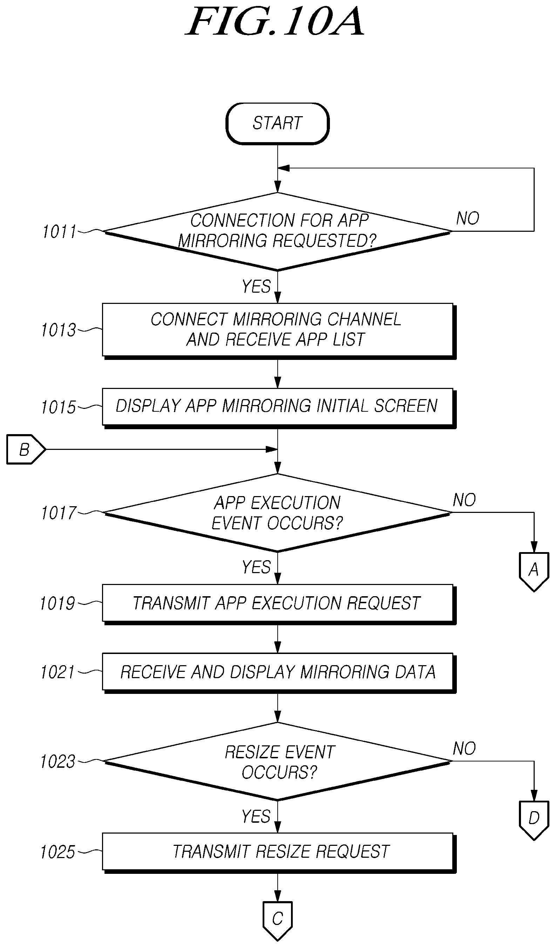

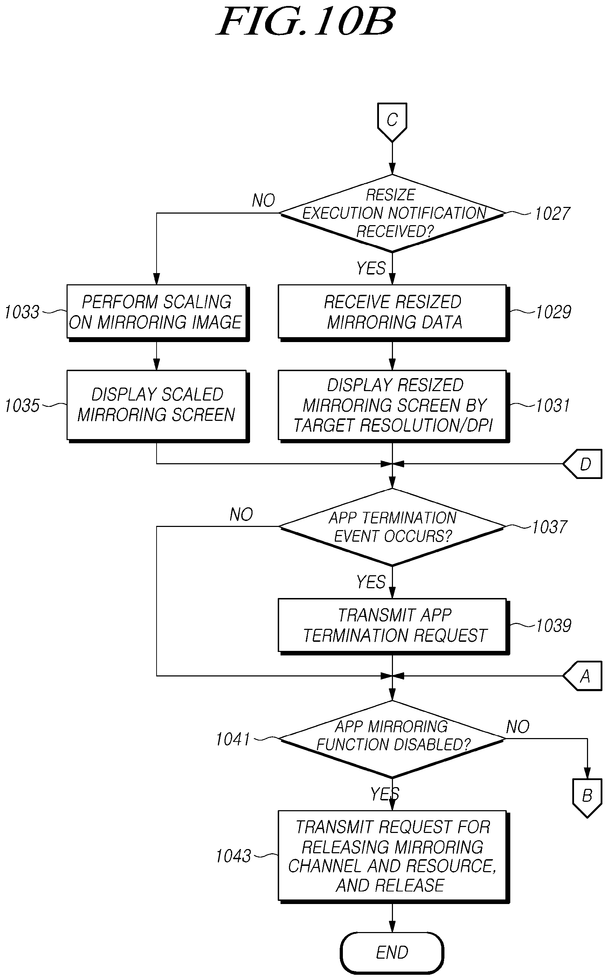

FIGS. 10A and 10B are flowcharts illustrating control for adjusting a size of a mirroring screen in an external electronic device (e.g., the external electronic device 20 of FIG. 1) according to an embodiment.

Referring to FIGS. 10A and 10B, in operation 1011, the external electronic device 20 may determine whether there is a connection request for app mirroring from the source electronic device (e.g., the source electronic device 10 of FIG. 1).

If receiving a connection request for mirroring from the source electronic device 10, the external electronic device 20 may connect a mirroring channel with the source electronic device using a communication protocol according to a predefined mirroring scheme (e.g., a wired mirroring scheme or a wireless mirroring scheme) in operation 1013. If the mirroring channel is successfully connected, the external electronic device 20 may receive its app list to the source electronic device 10. The app list may be a list of apps installed in the source electronic device 10 and capable of mirroring an app screen to the external electronic device 20.

In operation 1015, the external electronic device 20 may display an app mirroring initial screen (e.g., the basic mirroring screen 220 of FIG. 2 or the mirroring initial screen 320 of FIG. 3) on the display (e.g., the basic mirroring screen 220 of FIG. 3 or the mirroring initial screen 320 of FIG. 3) using the initial mirroring data provided from the source electronic device 10. The app mirroring initial screen may include, e.g., icons of apps available in the source electronic device 10. The app mirroring initial screen may include one or more function buttons to use a mirroring function. The function button may include, e.g., a screen switching button for switching the main screen on which icons are displayed or a setting button for setting a basic function for mirroring.

In operation 1017, the external electronic device 20 may identify whether an app execution event occurs. For example, the external electronic device 20 may recognize that an app execution event has occurred by selecting at least one icon among icons included in the initial mirroring screen 220 or 320.

If the app execution event occurs, the external electronic device 20 may transfer an app execution request message to the source electronic device 10 in operation 1019. The app execution request message may include information (e.g., an app identifier) about an app corresponding to an icon selected by the user. Transferring the app identifier is, e.g., to enable the source electronic device 10 to recognize an app to provide a mirroring screen. The app execution request message may include display information (e.g., mirroring screen size information, resolution, and/or DPI information) to display the mirroring screen for the corresponding app.

The external electronic device 20 may receive the mirroring data (e.g., the mirroring data 31 of FIG. 2) from the source electronic device 10 in operation 1021. The external electronic device 20 may output, through the display (e.g., the display 200 of FIG. 2 or the display 300 of FIG. 3), a mirroring screen with a desired resolution and/or DPI for each app (e.g., the first mirroring screen 221, the source mirroring screen 223, or the third mirroring screen 225 of FIG. 2 or the first mirroring screen 321, the source mirroring screen 323, or the third mirroring screen 325 of FIG. 3), based on the mirroring data 31. The external electronic device 20 may display the mirroring screen (e.g., the first mirroring screen 221 or 321, the second mirroring screen 223 or 323, or the third mirroring screen 225 or 325) on the basic mirroring screen 220 or 320 displayed on the display 200 or 300.

In operation 1023, the external electronic device 20 may detect that a resize event occurs according to a user input for adjusting the size of at least one mirroring screen.

If the resize event is detected, the external electronic device 20 may transmit a resize request to the source electronic device 10 in operation 1025. Upon the resize request, the external electronic device 20 may transfer the identifier indicating one or more target apps to be resized and size-related information to perform resizing for each of the one or more target apps to the source electronic device 10. The size-related information may differ according to the method for determining whether resizing is required.

In operation 1027, the external electronic device 20 may monitor whether a resize execution notification message is received from the source electronic device 10. The resize execution notification message may be transferred from the source electronic device 10 when there is a target app for which resizing is determined to be resized among the target apps where the resize event transferred to the source electronic device 10 has occurred. The resize execution notification message may include an identifier indicating one or more target apps to be resized. The resize execution notification message may include display information about the target resolution and/or the target DPI determined for the one or more target apps.

If failing to receive the resize execution notification message, the external electronic device 20 may perform up- or down-scaling on the mirroring image of the target app where the resize event has occurred in operation 1033. In operation 1035, the external electronic device 20 may display the up- or down-scaled mirroring image as a mirroring screen of a corresponding app.

If receiving the resize execution notification message, the external electronic device 20 may receive the resized mirroring data from the source electronic device 10 in operation 1029. The resized mirroring data may include the app identifier indicating the target app where resizing has been performed and the resized mirroring image for the target app.

In operation 1031, the external electronic device 20 may obtain the app identifier and the resized mirroring image from the resized mirroring data. The external electronic device 20 may change the size of the mirroring screen corresponding to one or more target apps using the obtained app identifier and resized mirroring image, and display the resized mirroring screen.

In operation 1037, the external electronic device 20 may determine whether an app termination event occurs according to an app termination request by the user. The app termination event may occur, e.g., when the user's input through interaction between the external electronic device 20 and the user indicates termination of mirroring.

If an app termination event occurs, the external electronic device 20 may transfer an app termination request to the source electronic device 10 in operation 1039. When the app termination is requested, the external electronic device 20 may transfer the app identifier indicating the app to be requested to be terminated, together.

In operation 1041, the external electronic device 20 may determine whether the mirroring function is requested to be disabled. The request for disabling the mirroring function may be generated, e.g., by manipulating an icon provided on the display (e.g., the display 200 of FIG. 2) of the source electronic device 10 by the user.

If the mirroring function is disabled, in operation 1043, the external electronic device 20 may release the resource for mirroring, such as discarding the decoder provided for all target apps where mirroring was provided.

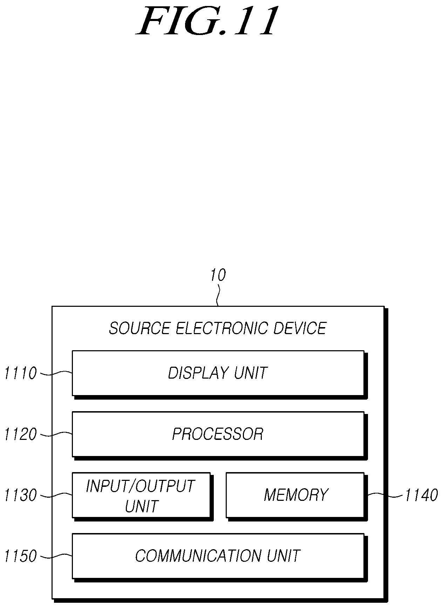

FIG. 11 is a view illustrating a configuration of a source electronic device (e.g., the source electronic device 10 of FIG. 1) according to an embodiment.

Referring to FIG. 11, the source device 10 may be connected to an external device (e.g., the external electronic device 20 of FIG. 1) through a network based on a predetermined communication protocol. If the source electronic device 10 is connected to the external electronic device 20 through the network, a communication channel according to a predetermined communication protocol may be allocated. The communication channel may be, e.g., a radio channel or a wired channel.

For example, the source electronic device 10 may include a display unit 1110, a processor 1120, an input/output unit 1130, a memory 1140, or a communication unit 1150.

The display unit 1110 may include a display panel or a touch panel. The display panel may visually provide information to the outside (e.g., the user) of the source electronic device 10. The display unit 1110 may include, for example, a display, a hologram device, or a projector and control circuitry to control a corresponding one of the display, hologram device, and projector. The touch panel may include a touch sensor configured to detect the user's touch, or a pressure sensor configured to measure the intensity of a force generated by the touch. The display unit 1110 may be controlled by electrical connection with the processor 1120. The operation of the display panel or touch panel included in the display unit 1110 may be independently controlled by electrical connection with the processor 1120. In an embodiment, the display panel may be controlled by the processor 1120 to visually provide display information to be displayed to the outside (e.g., the user).

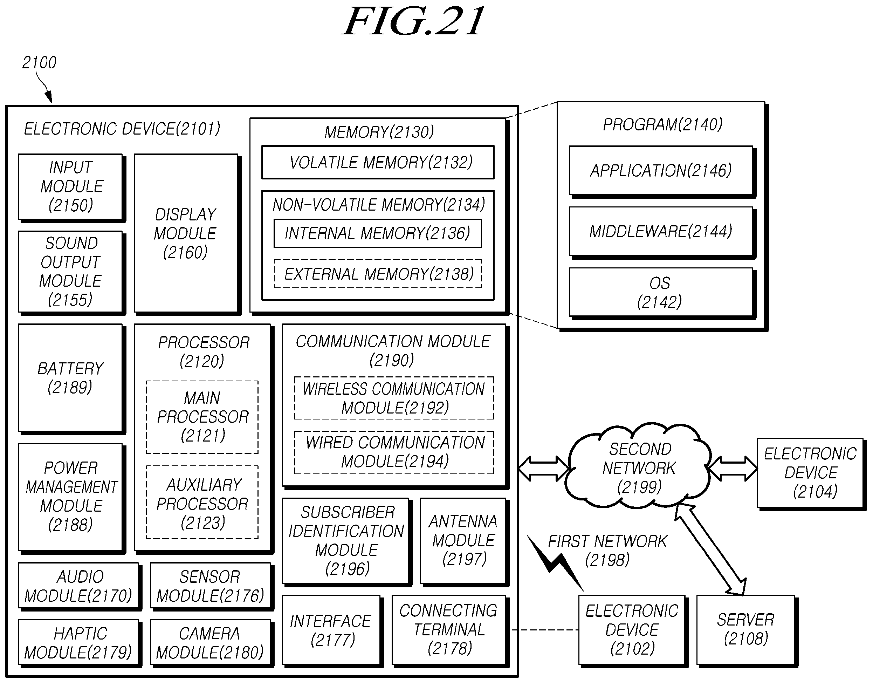

The processor 1120 may execute software (e.g., the program 2140 of FIG. 21) to control at least one other component (e.g., hardware or software component), such as an electrically connected display unit 1110, input/output unit 1130, memory 1140, or communication unit 1150, and may perform various data processing or computations. As at least part of the data processing or computation, the processor 1120 may store instructions or data received from other components (e.g., the display unit 1110, communication unit 1150, or input/output portion 127) in the memory 1140 (e.g., volatile memory), or process the instructions or data stored in the memory 1140, and store the processed resulting data in the storage unit 1140.

The input/output unit 1130 may receive a command or data to be used by a component (e.g., the processor 1120) of the source electronic device 10, from the outside (e.g., a user) of the source electronic device 10. The input/output unit 1130 may include, for example, a microphone, a mouse, a keyboard, keys (e.g., buttons), or a digital pen (e.g., a stylus pen).

The communication unit 1150 may establish a direct (e.g., wired) communication channel or a wireless communication channel with the external electronic device 20 or support communication through the established communication channel. The communication unit 1150 may include one or more communication processors that are operated independently of the processor 1120 and support direct (e.g., wired) communication or wireless communication. The communication unit 1150 may include a wireless communication module (e.g., the wireless communication module 2192 of FIG. 21) (e.g., a cellular communication module, a short-range wireless communication module, or a global navigation satellite system (GNSS) communication module) or a wired communication module (e.g., the wired communication module 2194 of FIG. 21) (e.g., a local area network (LAN) communication module or a power line communication (PLC) module). A corresponding one of these communication modules may communicate with the external electronic device 20, which is an external electronic device, via a network 40 (e.g., a short-range communication network, such as Bluetooth^{™}, wireless-fidelity (Wi-Fi) direct, or infrared data association (IrDA)) or a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other.

The memory 1140 may store various data used by at least one component (e.g., the display unit 1110, the processor 1120, the communication unit 1150, or the input/output unit 127) of the source electronic device 10. The various data may include, for example, software (e.g., the program 2140 of FIG. 21) and input data or output data for a command related thereto. The memory 1140 may include, e.g., a volatile or non-volatile memory.

If the mirroring function is activated, the processor 1120 may transfer the app list to the external electronic device 20 through the communication unit 1150. The app list may be a list of apps installed inside.

For example, the processor 1120 may generate an initial mirroring image including icons of mirrorable apps on a virtual display (e.g., the first virtual display 110, the second virtual display 120, and the third virtual display 130 of FIG. 2). The processor 1120 may generate initial mirroring data (e.g., the mirroring data 31 of FIG. 2) by the initial mirroring image, and provide the initial mirroring data to the external electronic device 20 through the communication unit 1150.

The processor 1120 may generate an encoder and/or a virtual display (e.g., the first virtual display 110, the second virtual display 120, and/or the third virtual display 130 of FIG. 2) corresponding to each of one or more target apps in response to an app execution request transferred from the external electronic device 20 through the communication unit 1150. If there are a plurality of target apps to be mirrored, the processor 1120 may generate a plurality of virtual displays. The processor 1120 may generate and operate, e.g., one to six virtual displays. The processor 1120 may execute a corresponding app on the virtual display. The processor 1120 may generate a mirroring image corresponding to a virtual app screen that may be displayed on the virtual display by executing an app. The processor 1120 may transmit the mirroring data 31 including the generated mirroring image to the external electronic device 20 through the communication unit 1150. For example, the processor 1120 may configure mirroring data 31 to include data required for mirroring the virtual app screen, as it is, in the mirroring display area (e.g., the first mirroring screen 221, the second mirroring screen 223, or the third mirroring screen 225 of FIG. 2 or the first mirroring screen 321, the second mirroring screen 323, or the third mirroring screen 325 of FIG. 2) allocated in the display (e.g., the display 200 of FIG. 2 or the display 300 of FIG. 3) of the external electronic device 20.

The processor 1120 may receive event information from the external electronic device 20 through the communication unit 1150. The processor 1120 may process an operation indicated by the collected event information on the virtual display of the target app by the collected event information. The processor 1120 may generate a mirroring image of the virtual app screen reflecting a processing result according to the event information. The processor 1120 may transmit the mirroring data 31 including the generated mirroring image to the external electronic device 20 through the communication unit 1150.

The processor 1120 may configure mirroring data using the target resolution and/or the target DPI considering the screen size after resizing the target app and transmit the same to the external electronic device 20 through the communication unit 1150. The target resolution and/or the target DPI may be determined and provided by the external electronic device 20, or may be determined and provided by the processor 1120 to the external electronic device 20.

According to an example, the processor 1120 may receive a resize request message from the external electronic device 20 through the communication unit 1150. The resize request message may be a request for adjusting the mirroring screen size corresponding to one or more target apps. If the processor 1120 receives the resize request, it may be an app identifier indicating one or more target apps from the external electronic device 20 and information indicating the target resolution and/or DPI determined for resizing for each target app.

The processor 1120 may identify one or more target apps to be resized by the app identifier. The processor 1120 may generate a resized mirroring image of the virtual app screen to which the target resolution and/or DPI determined for each target app is applied. The processor 1120 may configure mirroring data by the resized mirroring image and transmit the mirroring data to the external electronic device 20 through the communication unit 1150.

More specifically, if identifying one or more target apps, processor 1120 may discard the existing encoder of each target app and then generate a new encoder suitable for the target resolution and/or DPI. The processor 1120 may perform the resizing of changing the size of the virtual display considering the target resolution and/or DPI for each target app. The processor 1120 may generate a virtual app screen of each target app on the resized virtual display. The generated virtual app screen may be a resized app screen reflecting the target resolution and/or DPI. The processor 1120 may encode the resized mirroring image for the generated virtual app screen by the new encoder, and then configure mirroring data, and transmit the same to the external electronic device 20 through the communication unit 1150.

According to an example, the processor 1120 may receive resize information from the external electronic device 20 through the communication unit 1150. The resize information may include an identifier of one or more target apps where a resize event has occurred and screen size information for resizing of the mirroring screen of the target app. The screen size information may include information about at least one of the horizontal and/or vertical length (or height and/or width), the area of the mirroring screen, the ratio of the mirroring screen to the entire display area, or the variation in the mirroring screen size.

The processor 1120 may identify one or more target apps where a resize event has occurred by the app identifier. The processor 1120 may determine the target resolution and/or the target DPI for resizing of the virtual app screen to be mirrored to the external electronic device 20 using the resize information provided for resizing for each target app. For example, when resizing the corresponding virtual app screen to a desired size, the processor 1120 may determine the optimal resolution and/or the optimal DPI capable displaying on the display unit 1210 of the external electronic device 20 as the target resolution and/or the target DPI. The optimal resolution and/or optimal DPI may be, e.g., a resolution and/or DPI capable of effectively transferring the visual information to be transferred through the resized mirroring screen to the user.

The processor 1120 may determine whether it is required to perform resizing on one or more target apps where the resize event has occurred. The processor 1120 may determine that resizing is not required, e.g., when the mirroring screen which is resized and provided does not make a significant difference from the mirroring screen before resizing. For example, if the degree of change is such that the layout of the mirroring screen is changed after resizing, the processor 1120 may determine that resizing for the corresponding app is required.

The processor 1120 may transmit a resize request message including the identifier indicating the target app determined to be resized and the target resolution and/or the target DPI determined for resizing of the corresponding target app to the external electronic device 20 through the communication unit 1150.

The processor 1120 may generate a mirroring image (resized mirroring image) of a virtual app screen to which the target resolution and/or DPI determined for each target app determined to be resized is applied. The processor 1120 may configure mirroring data by the resized mirroring image generated for each target app and transmit the mirroring data to the external electronic device 20 through the communication unit 1150.

More specifically, if identifying one or more target apps determined to be resized, processor 1120 may discard the existing encoder of each target app and then generate a new encoder suitable for the target resolution and/or DPI. The processor 1120 may perform the resizing of changing the size of the virtual display considering the target resolution and/or DPI for each target app. The processor 1120 may generate a virtual app screen of each target app on the resized virtual display. The generated virtual app screen may be a resized app screen reflecting the target resolution and/or DPI. The processor 1120 may encode the resized mirroring image for the generated virtual app screen by the new encoder, and then configure mirroring data, and transmit the same to the external electronic device 20 through the communication unit 1150.

According to an example, the processor 1120 may receive an app termination request from the external electronic device 20 through the communication unit 1150. If the processor 1120 receives the app termination request from the external electronic device 20, the processor 1120 may terminate the corresponding app and/or the related task. The processor 1120 may release, e.g., a related resource for mirroring of the corresponding app requested to be terminated. The processor 1120 may generate an updated mirroring image reflecting the termination of the corresponding app and transmit it to the external electronic device 20 through the communication unit 1150.

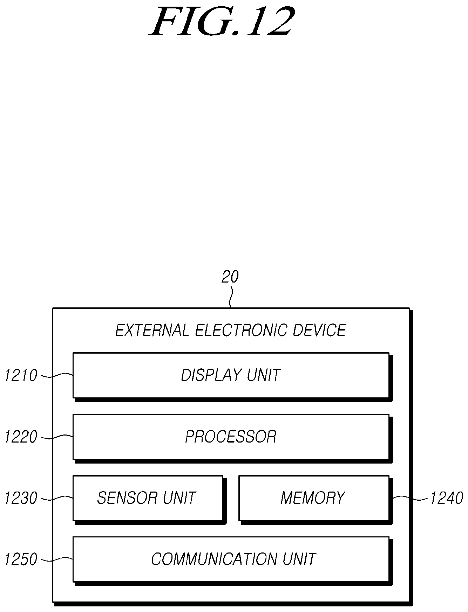

FIG. 12 is a view illustrating a configuration of an external electronic device (e.g., the external electronic device 20 of FIG. 1) according to an embodiment.

Referring to FIG. 12, the external device 20 may be connected to a source device (e.g., the source electronic device 10 of FIG. 1) through a network based on a predetermined communication protocol. If the external electronic device 20 is connected to the source electronic device 10 through the network, a communication channel according to a predetermined communication protocol may be allocated. The communication channel may be, e.g., a radio channel or a wired channel.

For example, the external electronic device 20 may include a display unit 1210, a processor 1220, a sensor unit 1230, a memory 1240, or a communication unit 1250.

The display unit 1210 may visually provide information (e.g., real image information or mirroring image information) to the outside (e.g., the user) of the external electronic device 20. The display unit 1210 may include, for example, a display, a hologram device, or a projector and control circuitry to control a corresponding one of the display, hologram device, and projector. The display unit 1210 may be controlled by electrical connection with the processor 1220.

The processor 1220 may execute software (e.g., the program 2140 of FIG. 21) to control at least one other component (e.g., hardware or software component), such as an electrically connected display unit 1210, sensor unit 1230, memory 1240, or communication unit 1250, and may perform various data processing or computations. As at least part of the data processing or computation, the processor 1220 may store instructions or data received from other components (e.g., the display unit 1210, sensor unit 1230, or communication unit 1250) in the memory 1240 (e.g., volatile memory), or process the instructions or data stored in the memory 1240, and store the processed resulting data in the storage unit 1240.

The sensor unit 1230 may detect an operation state (e.g., power or temperature) of the external electronic device 20, an external environment state (e.g., a user state), or a movement of a hand or gaze for interaction with the user, and may generate an electrical signal or a data value corresponding to the detected state. The sensor unit 1230 may include, e.g., a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The communication unit 1250 may establish a direct (e.g., wired) communication channel or a wireless communication channel with the source electronic device 10 or support communication through the established communication channel. The communication unit 1250 may include one or more communication processors that are operated independently of the processor 1220 and support direct (e.g., wired) communication or wireless communication. The communication unit 1250 may include a wireless communication module (e.g., the wireless communication module 2192 of FIG. 21) (e.g., a cellular communication module, a short-range wireless communication module, or a GNSS communication module) or a wired communication module (e.g., the wired communication module 2194 of FIG. 21) (e.g., a LAN communication module or a power line communication (PLC) module). A corresponding one of these communication modules may communicate with the source electronic device 10, which is an external electronic device, via a network 40 (e.g., a short-range communication network, such as Bluetooth^{™}, Wi-Fi direct, or IrDA) or a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other.

The memory 1240 may store various data used by at least one component (e.g., the display unit 1210, the processor 1220, the communication unit 1250, or the input/output unit 127) of the external electronic device 20. The various data may include, for example, software (e.g., the program 2140 of FIG. 21) and input data or output data for a command related thereto. The memory 1240 may include, e.g., a volatile or non-volatile memory.

The external electronic device 20 may further include a camera module. The camera module may capture a still image and a video. The camera module may include one or more lenses, image sensors, image signal processors, or flashes. For example, the camera module may be used for interaction with the user.

According to an example, the processor 1220 may control the communication unit 1250 to connect the source electronic device 10 and then receive an app list from the source electronic device 10. The app list may be a list of the apps installed in the source electronic device 10. The processor 1220 may obtain information about an app capable of providing mirroring from the app list.

The processor 1220 may receive the initial mirroring data 31 from the source electronic device 10. The processor 1220 may display an initial mirroring screen (e.g., the initial mirroring screen 220 or 320 of FIG. 2 or 3) for a mirroring function on the whole or part of the display area of the display unit 1210 using information about the app and/or the initial mirroring data 31.

If an app execution event occurs according to the user's request, the processor 1220 may transfer an app execution request message to the source electronic device 10. For example, an app execution event may occur by selecting at least one icon among icons included in the initial mirroring screen 220 or 330. The app execution request message may include information (e.g., an app identifier) about an app corresponding to an icon selected by the user. Transferring the app identifier is, e.g., to enable the source electronic device 10 to recognize an app to provide a mirroring screen. The app execution request message may include display information (e.g., mirroring screen size information, target resolution, and/or target DPI information) to display the mirroring screen for the corresponding app.

The processor 1220 may receive the mirroring data (e.g., the mirroring data 31 of FIG. 2) from the source electronic device 10 through the communication unit 1250. The processor 1220 may control the display unit 1210 (e.g., the display 200 of FIG. 2 or the display 300 of FIG. 3) to output a mirroring screen with a desired resolution and/or DPI for each app (e.g., the first mirroring screen 221, the source mirroring screen 223, or the third mirroring screen 225 of FIG. 2 or the first mirroring screen 321, the source mirroring screen 323, or the third mirroring screen 325 of FIG. 3), based on the mirroring data 31. The processor 1220 may control the display unit 1210 to display one or more mirroring screens (e.g., the first mirroring screen 221 or 321, the second mirroring screen 223 or 323, or the third mirroring screen 225 or 325) on the basic mirroring screen 220 or 320 already displayed.

If a user input event occurs, the processor 1220 may transfer event information about the generated user input event to the source electronic device 10 through the communication unit 1250. The event information may include, e.g., an identifier indicating the target app where the user input event has occurred and information about the generated event. The processor 120 may receive the mirroring data 31 reflecting the processing result according to the event information from the source electronic device 10 through the communication unit 1250. The processor 1220 may update the mirroring screen of the corresponding target app using the mirroring image included in the mirroring data 31.

If a resize event occurs, the processor 1220 may receive a resized mirroring image having a screen size adjusted corresponding to the target app where the resize event has occurred from the source electronic device 10 through the communication unit 1250. For example, the processor 1220 may determine the target resolution and/or the target DPI to be applied for resizing for the target app and transfer the same to the source electronic device 10 through the communication unit 1250. For example, the processor 1250 may receive the target resolution and/or the target DPI to be applied for resizing for the target app from the source electronic device 10 through the communication unit 1250.

According to an example, if a resize event occurs, the processor 1220 may determine whether resizing is required for one or more mirroring screens where the resize event has occurred. The processor 1220 may determine that resizing is not required, e.g., when the mirroring screen which is resized and provided does not make a significant difference from the mirroring screen before resizing. For example, if the degree of change is such that the layout of the mirroring screen is changed after resizing, the processor 1220 may determine that resizing for the corresponding app is required.

The processor 1220 may perform up-scaling or down-scaling on the mirroring image of the target app for which resizing is not required. The processor 1220 may control the display unit 1210 to output a mirroring image generated by performing up- or down-scaling through the mirroring screen.

The processor 1120 may determine the target resolution and/or the target DPI of each target app for which resizing is required. The processor 1120 may consider the size of the mirroring screen after resizing in order to determine the target resolution and/or target DPI. For example, when resizing the mirroring screen to a desired size, the processor 1120 may determine the optimal resolution and/or the optimal DPI capable displaying on the display unit 1210 as the target resolution and/or the target DPI. The optimal resolution and/or optimal DPI may be, e.g., a resolution and/or DPI capable of effectively transferring the visual information to be transferred through the resized mirroring screen to the user. If it is determined that resizing for the plurality of mirroring screens is required, the processor 1220 may determine the target resolution and/or the target DPI corresponding to each of the plurality of mirroring screens.

The processor 1220 may transfer a resize request message to the source electronic device 10 through the communication unit 1250. The resize request message may be a request for adjusting the mirroring screen size corresponding to one or more target apps. The resize request message may include an app identifier indicating one or more target apps required to be resized and information indicating the target resolution and/or DPI for resizing for each target app.

The processor 1220 may receive resized mirroring data (mirror data with a changed screen size) from the source electronic device 10 through the communication unit 1250. The mirroring data may include, e.g., an app identifier indicating the resized target app and a resized mirroring image (mirroring data with a changed screen size) for the target app. The processor 1220 may control the display unit 1210 to output a resized mirroring image where the screen size is changed corresponding to the app identified by the app identifier.

According to an example, if a resize event occurs, the processor 1220 may transfer resize information to the source electronic device 10 through the communication unit 1250. The resize information may include an identifier indicating the target app corresponding to one or more mirroring screens where the resize event has occurred. The resize information may include screen size information about the mirroring screen after resizing. The screen size information may include information about at least one of the horizontal and/or vertical length (or height and/or width), the area of the mirroring screen, the ratio of the mirroring screen to the entire display area, or the variation in the mirroring screen size.

The processor 1220 may receive a resize request message from the source electronic device 10 through the communication unit 1250. The resize request message may include an identifier indicating a target app determined to be resized among target apps where a resize event has occurred by the source electronic device 10. The resize request message may include information about the target resolution and/or the target DPI determined for each target app determined to require resizing.

The processor 1220 may receive resized mirroring data generated by performing resizing from the source electronic device 10 through the communication unit 1250. The resized mirroring data may include the app identifier indicating the resized target app and the resized mirroring image for the target app. The processor 1220 may obtain a resized mirroring image generated for each of one or more resized target apps from the resized mirroring data. The processor 1220 may control the display unit 1210 to output the resized mirroring image obtained for each target app.

The processor 1220 may perform up- or down-scaling on the mirroring image of the app where a resize event has occurred but a target resolution and/or target DPI has not been provided from the source electronic device 10. The processor 1220 may control the display unit 1210 to output an up- or down-scaled mirroring image through the mirroring screen.

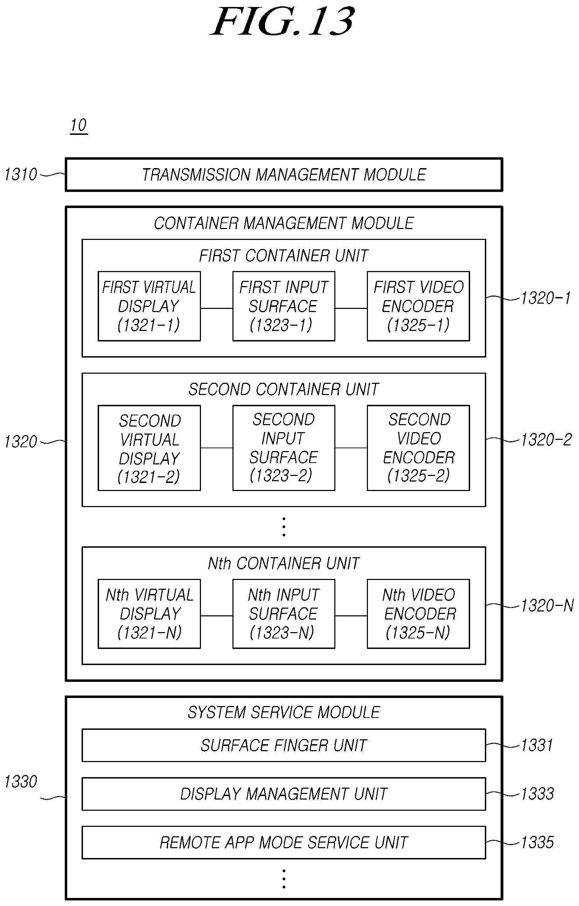

FIG. 13 is a view illustrating a functional configuration of a source device (e.g., the source electronic device 10 of FIG. 1) for changing the size of a mirroring screen according to an embodiment.

Referring to FIG. 13, the source electronic device 10 may include a transmission management module (transfer manager) 1310, a container management module (app execution container manager) 1320, or a system service module (system services) 1330.

The transmission management module 1310 may serve to receive an event request, mirroring request, or response (ACK) message from an external electronic device (e.g., the external device 20 of FIG. 1). The transmission management module 1310 may serve to transmit mirroring data (e.g., the mirroring data 310 of FIG. 2) for mirroring to the external electronic device 20.

The container management module 1320 may serve to control the mirroring logic. The container management module 1320 may generate a container unit (app execution container) 1320-1, 1320-2, and 1320-N for executing the requested app if, e.g., an app execution request from the external electronic device 20 is provided through the transmission management module 1310. The container management module 1320 may own or manage one or more container units 1320-1, 1320-2, and 1320-N for mirroring the app screen. If an app-related request (e.g., the event request 33 of FIG. 2) is provided through the transmission management module 1310 from the external electronic device 20, the container management module 1320 may distribute the request and/or data to the corresponding container using the container identifier (id) generated in response to the app for which the request was received. For example, if an event is generated in the system service module 1330, the container management module 1320 may specify a target container using a display identifier (display Id) or a task identifier (task Id). The container management module 1320 may serve to send an event to the specified target container or to transfer the event to the external electronic device 20 through the transmission management module 1310.

The container units 1320-1, 1320-2, and 1320-N may serve to control each mirroring session for mirroring. The container units 1320-1, 1320-2, and 1320-N may have a unique identifier ID. The container units 1320-1, 1320-2, and 1320-N may form a mapping relationship with a remote app container unit (remote app container manager) provided in the external electronic device 20 using the unique identifier. The container units 1320-1, 1320-2, and 1320-N may have a package name, a task identifier (id), user identification information (user ID), or the like of the running app. the container units 1320-1, 1320-2, and 1320-N, respectively, may include virtual displays 1321-1, 1321-2, and 1321-N, input surfaces 1323-1, 1323-2, and 1323-N, or video encoders 1325-1, 1325-2, and 1325-N.

For example, the container units 1320-1, 1320-2, and 1320-N may generate virtual displays by generating the video encoders 1325-1, 1325-2, and 1325-N and designating the input surfaces 1323-1, 1323-2, and 1323-N of the video encoders 1325-1, 1325-2, and 1325-N as surfaces of the virtual displays 1321-1, 1321-2, and 1321-N. The container units 1320-1, 1320-2, and 1320-N may execute apps corresponding to the virtual displays 1321-1, 1321-2, and 1321-N.

According to an example, if an app is executed on the virtual displays 1321-1, 1321-2, and 1321-N, the surface finger unit 1331 included in the system service module 1330 may display the app screen on the input surface of the corresponding virtual display. The mirroring data regarding the image or screen displayed on the virtual displays 1321-1, 1321-2, and 1321-N by the surface finger unit 1331 may be transferred to the video encoders 1325-1, 1325-2, and 1325-N to be compressed. The compressed mirroring data may be transferred to the external electronic device 20 through the transmission management module 1310. The external electronic device 20 may output the mirroring screen using the transferred mirroring data.

The system service module 1330 may include a remote app mode service unit 435, a surface finger 431, or a display manager 1333. The remote app mode service unit 1335 may perform a function requiring system authority, such as executing an app on the virtual displays 1321-1, 1321-2, and 1321-N or terminating the app.

As described above, the source electronic device 10 may execute each of the plurality of apps on an independently generated virtual display, and transmit a screen according to the execution of the app on each virtual display to the external electronic device 20 so that multiple apps may float in the virtual space at the same time. The execution state of each of the apps executed on the virtual display may be managed by the container management module 1320. For example, the container management module 420 may manage each of the apps on a container basis including a class in charge of input processing and the video encoder.

For example, the source electronic device 10 may receive a request for resizing the virtual display from the external electronic device 20, resize the virtual app screen, and restart mirroring the resized virtual app screen to the external electronic device 20.

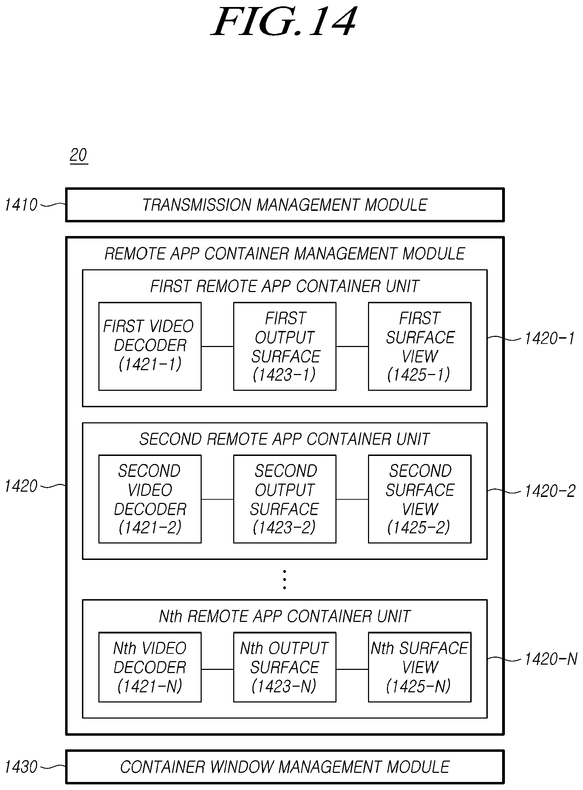

To that end, the transmission management module 1310 of the source electronic device 10 may receive a resize request transmitted by the transmission management module (e.g., the transmission management module 1410 of FIG. 14) of the external electronic device 20. The transmission management module 1310 may transfer the received resize request to the container management module 1320.

The container management module 1320 may analyze the resize request to obtain the app identifier indicating the app where the resize event has occurred. The container management module 1320 may select a container unit for which resizing is required from among N container units 1320-1, 1320-2..., 1320-N using the obtained app identifier. The container management module 1320 may transfer a resize command to the selected container unit.

The container unit receiving the resize command from the container management module 1320 may stop the existing video encoder and generate a new video encoder.

The container management module 1320 may request the remote app mode service unit 1335 constituting the system service module 1330 to resize the virtual display using the obtained app identifier. In this case, the container management module 1320 may provide an identifier (ID) of the virtual display, a resolution and/or DPI to be changed into (target resolution and/or target DPI) or an input surface corresponding to the video encoder to the remote app mode service unit 1335.

The remote app mode service unit 1335 may resize the corresponding virtual display using the identifier ID of the virtual display, the resolution and/or DPI to be changed into (target resolution and/or target DPI), or the input surface corresponding to the video encoder provided by the container management module 1320. The remote app mode service unit 1335 may set the surface of the resized virtual display as the input surface of the video encoder.

The resized container unit starts video encoding for the app screen to be mirrored while allowing the surface finger unit 1331 constituting the system service module 1330 to synthesize and update the app screen executed on the virtual display, on the virtual display. The mirroring image corresponding to the updated app screen may be encoded by a corresponding video encoder. Resize mirroring data generated by the encoded resized mirroring image may be transferred to the transmission management module 1310. The transmission management module 1310 may transfer the resized mirroring data to the transmission management module (e.g., the transmission management module 1410 of FIG. 14) of the external electronic device 20.

The remote app container management module (e.g., the remote app container management module 1420 of FIG. 14) of the external electronic device 20 may transfer resized mirroring data to the remote app container unit having the same identifier as the container unit of the source electronic device 10 that has performed the resizing. The remote app container unit receiving the resized mirroring data decodes the resized mirroring image of the resized mirroring data through a decoder and updates the decoded mirroring image to a connected surface view, so that mirroring may be restarted.

FIG. 14 is a view illustrating a functional configuration of an external device (e.g., the external electronic device 20 of FIG. 1) for changing the size of a mirroring screen according to an embodiment.

Referring to FIG. 14, the external electronic device 20 may include a transmission management module (transfer manager) 1410, a remote app container management module (remote app container manager) 1420, or a container window management module (container window manager) 1430.

The remote app container management module 1420 may serve to generate, dismantle/destroy, or manage one or more remote app container units 1420-1, 1420-2, and 1420-N. The remote app container management module 520 may serve to distribute mirroring data transferred from the source electronic device 10 through the transmission management module 1410 to the corresponding remote app container units (remote app container) 1420-1, 1420-2, and 1420-N. The remote app container management module 1420 may be provided corresponding to the container management module 1420 of the source electronic device 10.

The remote app container units 1420-1, 1420-2, and 1420-N may be responsible for one screen mirroring session. The remote app container units 1420-1, 1420-2, and 1420-N may have a unique identifier (id). The remote app container units 1420-1, 1420-2, and 1420-N may correspond to a specific container unit that is one of the container units (app execution container) 1320-1, 1320-2, and 1320-N of the source electronic device 10 using the container id.

The remote app container units 1420-1, 1420-2, and 1420-N may display the mirroring image in the basic display area or the extended area using the resolution and/or DPI determined by the container window management module 1430.

The remote app container units 1420-1, 1420-2, and 1420-N may include video decoders 1421-1, 1421-2, and 1421-N, output surfaces (out surface) 1423-1, 1423-2, and 1423-N, or surface views 1425-2, 1425-2, and 1425-N. The remote app container units 1420-1, 1420-2, and 1420-N may generate video decoders 1421-1, 1421-2, and 1421-N or surface views 1425-2, 1425-2, and 1425-N in response to execution of the app to provide mirroring in the source electronic device 10. The video decoders 1421-1, 1421-2, and 1421-N may decode the compressed mirroring data transferred from the source electronic device 10 through the transmission management module 1410. The output surfaces 1423-1, 1423-2, and 1423-N may transfer the mirroring data decompressed by the video decoders 1421-1, 1421-2, and 1421-N to the surface views 1425-2, 1425-2, and 1425-N. The surface views 1425-2, 1425-2, and 1425-N may display the basic mirroring image in the basic display area or the extended mirroring image in the extended display area using the mirroring data transferred through the output surfaces 1423-1, 1423-2, and 1423-N.

The container window management module 1430 may serve to determine the resolution and/or the DPI for the mirroring screen corresponding to the app where mirroring is to be provided, and provide the same to the remote app container units 1420-1, 1420-2, and 1420-N.

The transmission management module 510 may serve to transfer a mirroring request or response (ACK) message to the source electronic device 10, or to receive mirroring-related data from the source electronic device 10 and transfer the same to the remote app container management module 1420.

As an example, when the user changes the size of the mirroring screen being mirrored, the external electronic device 20 may determine whether resizing is required, transfer a resize request to the source electronic device 10, and then restart mirroring according to the changed mirroring screen size, target resolution, and/or target DPI.

To that end, the container window management module 1430 of the external electronic device 20 may detect a resize event and related information related to whether resizing of the virtual display is required in the source electronic device 10. The container window management module 1430 may determine the target resolution and/or the target DPI according to the detected related information. The container window management module 1430 may compare the existing resolution and/or DPI with the target resolution and/or the target DPI, and determine whether a change to the target resolution and/or target DPI is required by the result. For the determination, the container window management module 1430 may utilize the previously transferred threshold policy, target resolution, and/or target DPI. The container window management module 1430 may request the remote app container management module 1420 to change to the target resolution and/or the target DPI.

The remote app container management module 1420 may transfer the app identifier indicating the app to be resized and information about the target resolution and/or target DPI to the transmission management module (e.g., the transmission management module 1310 of FIG. 13) of the source electronic device 10 for a resize request. The app identifier and the information about the target resolution and/or target DPI transferred to the transmission management module 1310 of the source electronic device 10 for the resize request may be transferred to the container management module 1320 of the source electronic device 10.

The remote app container unit 1420-1, 1420-2, or 1420-N of the external electronic device 20 may receive a resize request from the remote app container management module 1420. The remote app container unit 1420-1, 1420-2, or 1420-N may discard the existing video decoder 1421-1, 1421-2, or 1421-N corresponding to the app identifier and regenerate a new video decoder 1421-1, 1421-2, or 1421-N according to the target resolution and/or target DPI.

The surface of the surface view 1425-1, 1425-2, or 1425-N on the mirroring screen may be set to the output surface 1423-1, 1423-2, or 1423-N of the regenerated new video decoder 1421-1, 1421-2, or 1421-N. If the surface of the surface view 1425-1, 1425-2, or 1425-N on the mirroring screen is set, the video decoder 1421-1, 1421-2, or 1421-N for the resized mirroring image may be reoperated.

The remote app container management module 1420 of the external electronic device 20 may transfer resized mirroring data to the remote app container unit having the same identifier as the container unit of the source electronic device 10 that has performed the resizing. The remote app container unit receiving the resized mirroring data decodes the resized mirroring image of the resized mirroring data through a decoder and updates the decoded mirroring image to a connected surface view, so that mirroring may be restarted.

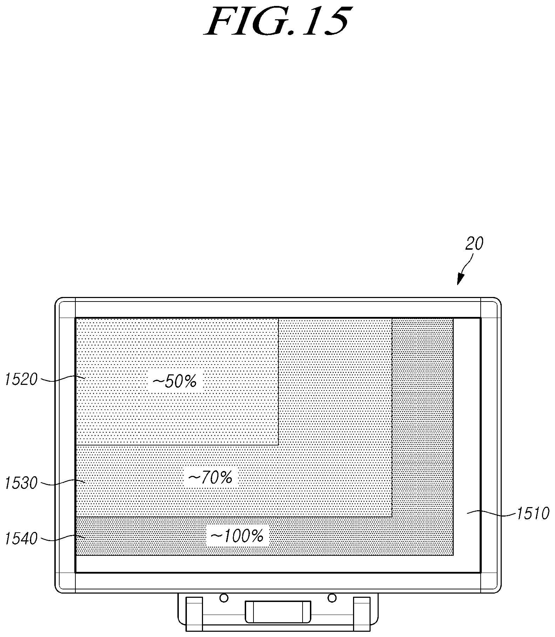

FIG. 15 is a view illustrating an example of determining whether resizing for a mirroring screen is required in an external electronic device (e.g., the external electronic device 20 of FIG. 1) according to an embodiment.

Referring to FIG. 15, the external electronic device 20 may determine whether resizing for the mirroring screen is required considering the ratio of the size of the mirroring screen (or the mirroring window) to the entire area 1510 of the display.

According to an example, the external electronic device 20 may set one or more threshold points as a criterion for determining that resizing is required using the percentage in which the mirroring screen occupies the entire area 1510 of the display.

For example, the external electronic device 20 sets the threshold points to 50%, 70%, and 100%. In this case, a first threshold section 1520 may be defined as the size of the mirroring screen being within 50% (to 50%) of the entire display area 1510, a second threshold section 1530 may be defined as the size of the mirroring screen being 50% to 70% of the entire display area 1510, and a third threshold section 1540 may be defined as the size of the mirroring screen being 70% to 100% of the entire display area 1510.

If a resize event occurs, the external electronic device 20 may calculate the percentage in which the target mirroring screen occupies the entire display area, identify which one of the first to third threshold sections 1520, 1530, and 1540 the calculated percentage belongs to, and make comparison as to whether the identified threshold section differs from the threshold section before the resize event occurs to determine whether resizing for the target mirroring screen is required.

For example, if the threshold section to which the percentage calculated after the resize event belongs and the threshold section to which the percentage calculated before the resize event belong differ from each other, the external electronic device 20 may determine that resizing for the target mirroring screen is required. If it is determined that resizing is required, the external device 20 may determine the target resolution and/or the target DPI considering the degree of change in size which has caused the resize event. When a plurality of threshold points are set as proposed above, the external electronic device 20 may stepwise resize the mirroring screen whenever the calculated percentage moves to the plurality of threshold points.

However, if the threshold section to which the percentage calculated after the resize event belongs and the threshold section to which the percentage calculated before the resize event belong are identical to each other, the external electronic device 20 may determine that resizing for the target mirroring screen is not required. In this case, the external electronic device 20 may adjust the screen size by up-scaling or down-scaling the mirroring screen.

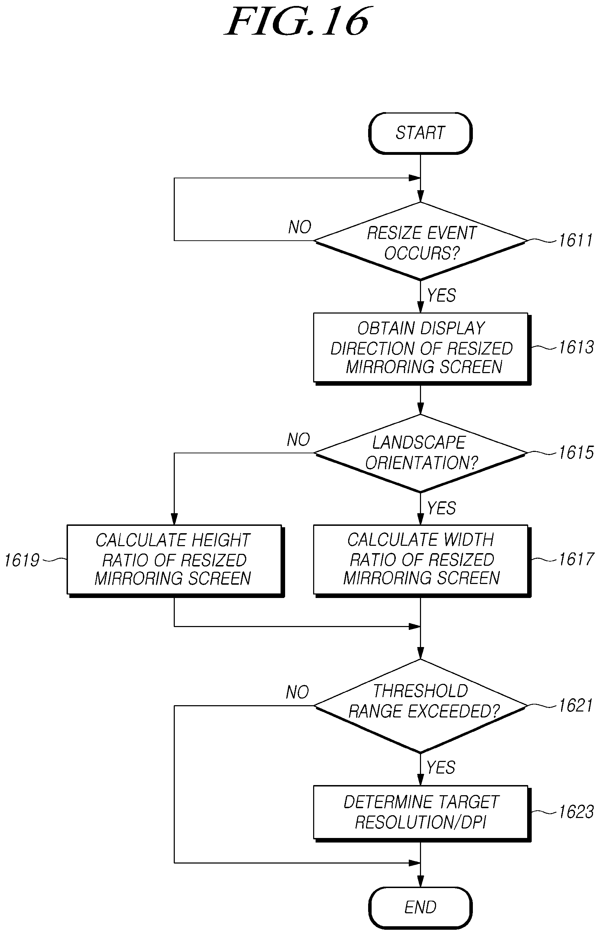

FIG. 16 is a flowchart illustrating control for determining a target resolution and/or a target DPI in a source electronic device (e.g., the source electronic device 10 of FIG. 1) or an external electronic device (e.g., the external electronic device 20 of FIG. 1) (hereinafter referred to as an "electronic device 10 or 20") according to an embodiment.

Referring to FIG. 16, in operation 1611, the electronic device 10 or 20 may determine whether a resize event occurs as the user forcibly adjusts the size of the mirroring screen.

If a resize event occurs, the electronic device 10 or 20 may obtain a display direction (e.g., horizontal orientation, vertical orientation) of the mirroring screen where the resize event has occurred in operation 1613.

In operation 1615, the electronic device 10 or 20 may determine whether the obtained display direction is a horizontal orientation or a vertical orientation. The electronic device 10 or 20 may perform operation 1617 if the obtained display direction is the horizontal orientation, and may perform operation 1619 if the obtained display direction is the vertical orientation.

In operation 1617, the electronic device 10 or 20 may calculate a width ratio of the target mirroring screen whose size has been forcibly adjusted by the user. The width ratio may correspond to a ratio of the width of the target mirroring screen to the width of the entire display area.

In operation 1619, the electronic device 10 or 20 may calculate a height ratio of the target mirroring screen whose size has been forcibly adjusted by the user. The height ratio may correspond to a ratio of the height of the target mirroring screen to the height of the entire display area.

In operation 1621, the electronic device 10 or 20 may determine whether the width ratio or the height ratio exceeds a threshold range. For example, the electronic device 10 or 20 may determine whether the width or height of the target mirroring screen is adjusted to a reference value or more.

If it is determined that the threshold range is exceeded, in operation 1623, the electronic device 10 or 20 may determine the target resolution and/or the target DPI by determining that a resize operation for the target mirroring screen is required.

If it is not determined that the threshold range is exceeded, the electronic device 10 or 20 may determine that a resize operation for the target mirroring screen is not required and adjust the screen size by up- or down-scaling.

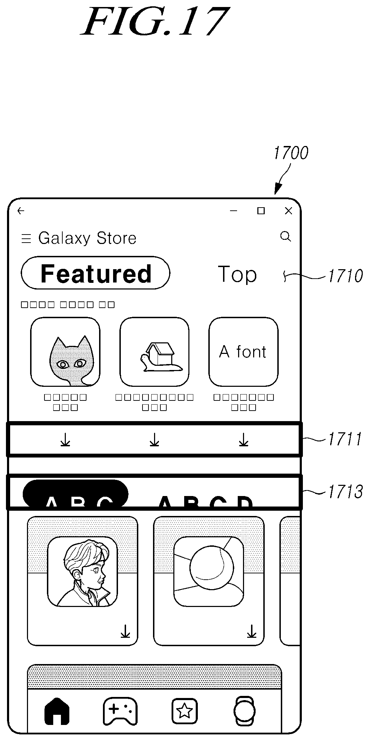

FIG. 17 is a view illustrating an example in which a mirroring image is damaged due to adjustment of a screen size in a mirroring system (e.g., the mirroring system 1 of FIG. 1).

Referring to FIG. 17, the external electronic device (e.g., the external electronic device 20 of FIG. 1) may have a display size that is relatively quite large as compared with the display size of the source electronic device (e.g., the source electronic device 10 of FIG. 1) but may have a relatively low resolution and DPI. In this case, if the size of the mirroring screen displayed on the external electronic device 20 is reduced, the resolution and the DPI are reduced, causing the target resolution and the target DPI detected for resizing to cease to exist realistically. Accordingly, in the resized mirroring screen 1700 mirrored by the source electronic device 10 and displayed on the display of the external electronic device 20, the mirroring image 1710 in a partial area is normally displayed, but the mirroring image 1711 and 1713 in another partial area may be broken and displayed.

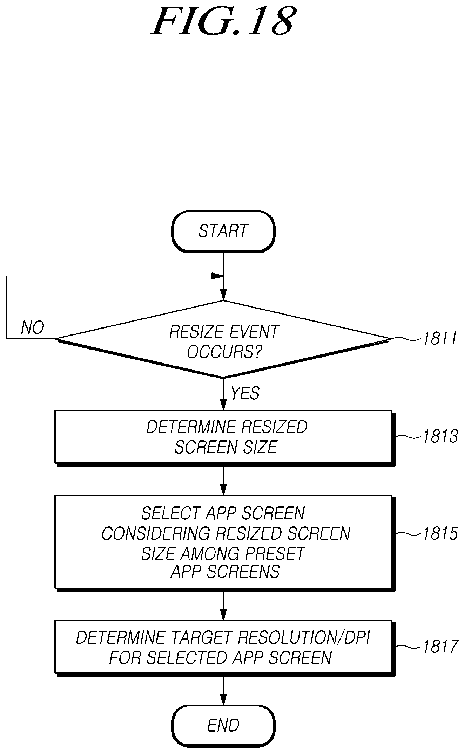

FIG. 18 is a flowchart illustrating control for determining a target resolution and/or a target DPI in a source electronic device (e.g., the source electronic device 10 of FIG. 1) or an external electronic device (e.g., the external electronic device 20 of FIG. 1) (hereinafter referred to as an "electronic device 10 or 20") according to an embodiment.

Referring to FIG. 18, the electronic device 10 or 20 may determine whether a resize event occurs as the size of the mirroring screen is forcibly adjusted by the user in operation 1811.

If a resize event occurs, the electronic device 10 or 20 may determine a resize screen size in operation 1813. The resize screen size may be determined based on the size of the mirroring screen changed by the user's forced adjustment that caused the resize event.

If determining the resize screen size, in operation 1815, the electronic device 10 or 20 may select one of preset app screens considering the determined resize screen size. The preset app screens may correspond to, e.g., a display size of an electronic device released as an actual product.

If selecting the app screen, in operation 1817, the electronic device 10 or 20 may determine a preset resolution and DPI corresponding to the selected app screen as the target resolution and target DPI for the resized mirroring screen.

Table 1 below shows an example of presetting an actual product for each threshold section where a resized screen size may belong, and presetting a screen size, resolution, and/or DPI applied to each actual product.

**[Table 1]**

| | Preset #1 | Preset #2 | Preset #3 |
|---|---|---|---|
| threshold section | 0~50% | 50~70% | 70~100% |
| resolution | 800*1280 | 800*1280 | 1200*1920 |
| DPI | 270 | 179 | 216 |
| converted inches | 6.5 inches | 8.7 inches | 10.5 inches |
| electronic devices | first electronic device | second electronic device | third electronic device |

Referring to Table 1, e.g., if the ratio of the resize screen size to the entire display area falls within the first threshold section of 50% or less (0 to 50%), the electronic device 10 or 20 may determine the target resolution and/or target DPI for resizing by a resolution (800*1280) and DPI 270 of the first electronic device preset for the first threshold section.

For example, if the ratio of the resize screen size to the entire display area falls within the second threshold section of 50% to 70%, the electronic device 10 or 20 may determine the target resolution and/or target DPI for resizing by a resolution (800*1280) and DPI 179 of the second electronic device preset for the second threshold section.

For example, if the ratio of the resize screen size to the entire display area falls within the third threshold section of 70% to 100%, the electronic device 10 or 20 may determine the target resolution and/or target DPI for resizing by a resolution (1200*1920) and DPI 216 of the second electronic device preset for the second threshold section.

As described above, electronic devices having various screen sizes may be selected so that the amount of content to be displayed for each mirroring screen may be adjusted for each preset section (Preset #1, Preset #2, and Preset #3). Further, if the source electronic device 10 simultaneously operates many virtual displays to mirror multiple apps, a target resolution and a target DPI may be selected focusing on the electronic device having the lowest resolution among the electronic devices having the same size and then the screen ratio may be corrected to define a pre-set so as reduce heat generation or performance issues.

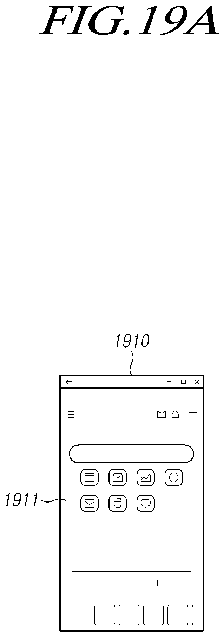

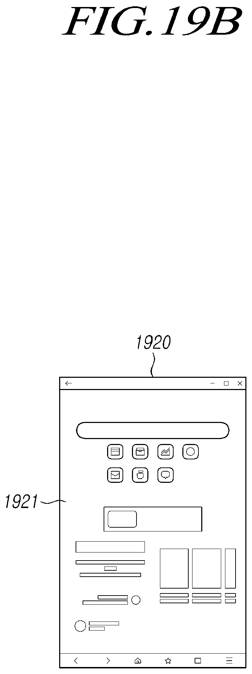

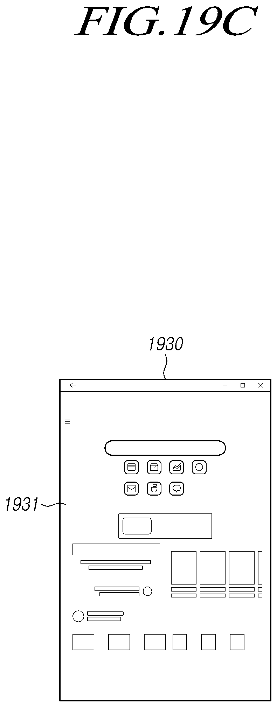

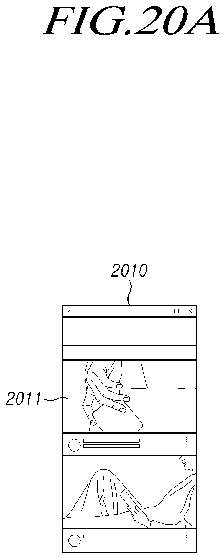

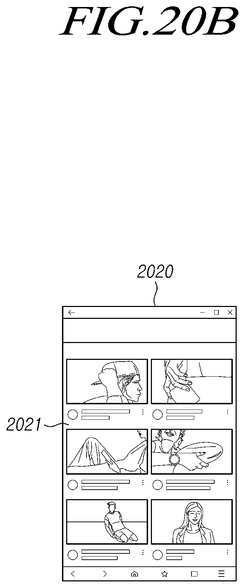

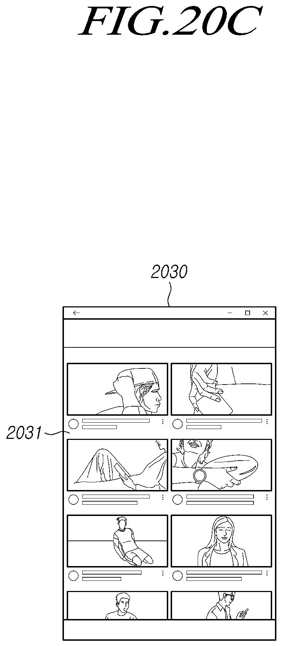

FIGS. 19A, 19B, and 19C are exemplary views illustrating mirroring screens that may be configured for each pre-set suggested in FIG. 18 for a search app, and FIGS. 20A, 20B, and 20C are exemplary views illustrating mirroring screens that may be configured for each pre-set suggested in FIG. 18 for an app providing video content.

Referring to FIGS. 19A, 19B, and 19C, FIG. 19A illustrates an example of a mirroring screen 1911 that may be displayed in a mirroring area 1910 having a predetermined screen size provided in a display of an external electronic device (e.g., the external electronic device 20 of FIG. 1) when the target resolution and the target DPI are determined as the resolution (800*1280) and DPI 270 of the first electronic device corresponding to Preset #1.

FIG. 19B illustrates an example of a mirroring screen 1921 that may be displayed in a mirroring area 1920 having a predetermined screen size provided in the display of the external electronic device 20 when the target resolution and the target DPI are determined as the resolution (800*1280) and DPI 170 of the second electronic device corresponding to Preset #2.

FIG. 19C illustrates an example of a mirroring screen 1931 that may be displayed in a mirroring area 1930 having a predetermined screen size provided in the display of the external electronic device 20 when the target resolution and the target DPI are determined as the resolution (1200*1920) and DPI 216 of the third electronic device corresponding to Preset #3.

Referring to FIG. 19A, 19B, or 19C, it may be identified that as the screen size increases, the target resolution is increased and/or the target DPI is changed, so that the layout of the mirroring screen is changed to increase the amount of content such as articles displayed.

Referring to FIGS. 20A, 20B, and 20C, FIG. 20A illustrates an example of a mirroring screen 2011 that may be displayed in a mirroring area 2010 having a predetermined screen size provided in a display of an external electronic device (e.g., the external electronic device 20 of FIG. 1) when the target resolution and the target DPI are determined as the resolution (800*1280) and DPI 270 of the first electronic device corresponding to Preset #1.

FIG. 20B illustrates an example of a mirroring screen 2021 that may be displayed in a mirroring area 2020 having a predetermined screen size provided in the display of the external electronic device 20 when the target resolution and the target DPI are determined as the resolution (800*1280) and DPI 170 of the second electronic device corresponding to Preset #2.

FIG. 20C illustrates an example of a mirroring screen 2031 that may be displayed in a mirroring area 2030 having a predetermined screen size provided in the display of the external electronic device 20 when the target resolution and the target DPI are determined as the resolution (1200*1920) and DPI 216 of the third electronic device corresponding to Preset #3.

Referring to FIG. 20A, 20B, or 20C, it may be identified that as the screen size increases, the target resolution is increased and/or the target DPI is changed, so that the layout of the mirroring screen is changed to increase the number of video contents displayed.

FIG. 21 is a block diagram illustrating an electronic device 2101 in a network environment 2100 according to various embodiments;

Referring to FIG. 21, the electronic device 2101 in the network environment 2100 may communicate with at least one of an electronic device 2102 via a first network 2198 (e.g., a short-range wireless communication network), or an electronic device 2104 or a server 2108 via a second network 2199 (e.g., a long-range wireless communication network). According to an embodiment, the electronic device 2101 may communicate with the electronic device 2104 via the server 2108. According to an embodiment, the electronic device 2101 may include a processor 2120, memory 2130, an input module 2150, a sound output module 2155, a display module 2160, an audio module 2170, a sensor module 2176, an interface 2177, a connecting terminal 2178, a haptic module 2179, a camera module 2180, a power management module 2188, a battery 2189, a communication module 2190, a subscriber identification module (SIM) 2196, or an antenna module 2197. In an embodiment, at least one (e.g., the connecting terminal 2178) of the components may be omitted from the electronic device 2101, or one or more other components may be added in the electronic device 101. According to an embodiment, some (e.g., the sensor module 2176, the camera module 2180, or the antenna module 2197) of the components may be integrated into a single component (e.g., the display module 2160).

The processor 2120 may execute, for example, software (e.g., a program 2140) to control at least one other component (e.g., a hardware or software component) of the electronic device 2101 coupled with the processor 2120, and may perform various data processing or computation. According to one embodiment, as at least part of the data processing or computation, the processor 2120 may store a command or data received from another component (e.g., the sensor module 2176 or the communication module 2190) in volatile memory 2132, process the command or the data stored in the volatile memory 2132, and store resulting data in non-volatile memory 2134. According to an embodiment, the processor 2120 may include a main processor 2121 (e.g., a central processing unit (CPU) or an application processor (AP)), or an auxiliary processor 2123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 2101 includes the main processor 2121 and the auxiliary processor 2123, the auxiliary processor 2123 may be configured to use lower power than the main processor 2121 or to be specified for a designated function. The auxiliary processor 2123 may be implemented as separate from, or as part of the main processor 2121.

The auxiliary processor 2123 may control at least some of functions or states related to at least one component (e.g., the display module 2160, the sensor module 2176, or the communication module 2190) among the components of the electronic device 2101, instead of the main processor 2121 while the main processor 2121 is in an inactive (e.g., sleep) state, or together with the main processor 2121 while the main processor 2121 is in an active state (e.g., executing an application). According to an embodiment, the auxiliary processor 2123 (e.g., an image signal processor or a communication processor) may be implemented as part of another component (e.g., the camera module 2180 or the communication module 2190) functionally related to the auxiliary processor 123. According to an embodiment, the auxiliary processor 2123 (e.g., the neural processing unit) may include a hardware structure specified for artificial intelligence model processing. The artificial intelligence model may be generated via machine learning. Such learning may be performed, e.g., by the electronic device 2101 where the artificial intelligence is performed or via a separate server (e.g., the server 2108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 2130 may store various data used by at least one component (e.g., the processor 2120 or the sensor module 2176) of the electronic device 2101. The various data may include, for example, software (e.g., the program 2140) and input data or output data for a command related thereto. The memory 2130 may include the volatile memory 2132 or the non-volatile memory 2134.

The program 2140 may be stored in the memory 2130 as software, and may include, for example, an operating system (OS) 2142, middleware 2144, or an application 2146.

The input module 2150 may receive a command or data to be used by other component (e.g., the processor 2120) of the electronic device 2101, from the outside (e.g., a user) of the electronic device 2101. The input module 2150 may include, for example, a microphone, a mouse, a keyboard, keys (e.g., buttons), or a digital pen (e.g., a stylus pen).

The sound output module 2155 may output sound signals to the outside of the electronic device 2101. The sound output module 2155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 2160 may visually provide information to the outside (e.g., a user) of the electronic device 2101. The display 2160 may include, for example, a display, a hologram device, or a projector and control circuitry to control a corresponding one of the display, hologram device, and projector. According to an embodiment, the display 2160 may include a touch sensor configured to detect a touch, or a pressure sensor configured to measure the intensity of a force generated by the touch.

The audio module 2170 may convert a sound into an electrical signal and vice versa. According to an embodiment, the audio module 2170 may obtain the sound via the input module 2150, or output the sound via the sound output module 2155 or a headphone of an external electronic device (e.g., an electronic device 2102) directly (e.g., wiredly) or wirelessly coupled with the electronic device 2101.

The sensor module 2176 may detect an operational state (e.g., power or temperature) of the electronic device 2101 or an environmental state (e.g., a state of a user) external to the electronic device 101, and then generate an electrical signal or data value corresponding to the detected state. According to an embodiment, the sensor module 2176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 2177 may support one or more specified protocols to be used for the electronic device 2101 to be coupled with the external electronic device (e.g., the electronic device 2102) directly (e.g., wiredly) or wirelessly. According to an embodiment, the interface 2177 may include, for example, a high definition multimedia interface (HDMI), a universal serial bus (USB) interface, a secure digital (SD) card interface, or an audio interface.

A connecting terminal 2178 may include a connector via which the electronic device 2101 may be physically connected with the external electronic device (e.g., the electronic device 2102). According to an embodiment, the connecting terminal 2178 may include, for example, a HDMI connector, a USB connector, a SD card connector, or an audio connector (e.g., a headphone connector).

The haptic module 2179 may convert an electrical signal into a mechanical stimulus (e.g., a vibration or motion) or electrical stimulus which may be recognized by a user via his tactile sensation or kinesthetic sensation. According to an embodiment, the haptic module 2179 may include, for example, a motor, a piezoelectric element, or an electric stimulator.

The camera module 2180 may capture a still image or moving images. According to an embodiment, the camera module 2180 may include one or more lenses, image sensors, image signal processors, or flashes.

The power management module 2188 may manage power supplied to the electronic device 2101. According to an embodiment, the power management module 2188 may be implemented as at least part of, for example, a power management integrated circuit (PMIC).

The battery 2189 may supply power to at least one component of the electronic device 2101. According to an embodiment, the battery 2189 may include, for example, a primary cell which is not rechargeable, a secondary cell which is rechargeable, or a fuel cell.

The communication module 2190 may support establishing a direct (e.g., wired) communication channel or a wireless communication channel between the electronic device 2101 and the external electronic device (e.g., the electronic device 2102, the electronic device 2104, or the server 2108) and performing communication via the established communication channel. The communication module 2190 may include one or more communication processors that are operable independently from the processor 2120 (e.g., the application processor (AP)) and supports a direct (e.g., wired) communication or a wireless communication. According to an embodiment, the communication module 2190 may include a wireless communication module 2192 (e.g., a cellular communication module, a short-range wireless communication module, or a global navigation satellite system (GNSS) communication module) or a wired communication module 2194 (e.g., a local area network (LAN) communication module or a power line communication (PLC) module). A corresponding one of these communication modules may communicate with the external electronic device 2104 via a first network 2198 (e.g., a short-range communication network, such as Bluetooth^{™}, wireless-fidelity (Wi-Fi) direct, or infrared data association (IrDA)) or a second network 2199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 2192 may identify or authenticate the electronic device 2101 in a communication network, such as the first network 2198 or the second network 2199, using subscriber information (e.g., international mobile subscriber identity (IMSI)) stored in the subscriber identification module 2196.

The wireless communication module 2192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 2192 may support a high-frequency band (e.g., the mmWave band) to achieve, e.g., a high data transmission rate. The wireless communication module 2192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 2192 may support various requirements specified in the electronic device 2101, an external electronic device (e.g., the electronic device 2104), or a network system (e.g., the second network 2199). According to an embodiment, the wireless communication module 2192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 2197 may transmit or receive a signal or power to or from the outside (e.g., the external electronic device). According to an embodiment, the antenna module 2197 may include one antenna including a radiator formed of a conductor or conductive pattern formed on a substrate (e.g., a printed circuit board (PCB)). According to an embodiment, the antenna module 2197 may include a plurality of antennas (e.g., an antenna array). In this case, at least one antenna appropriate for a communication scheme used in a communication network, such as the first network 2198 or the second network 2199, may be selected from the plurality of antennas by, e.g., the communication module 2190. The signal or the power may then be transmitted or received between the communication module 2190 and the external electronic device via the selected at least one antenna. According to an embodiment, other parts (e.g., radio frequency integrated circuit (RFIC)) than the radiator may be further formed as part of the antenna module 2197.

According to various embodiments, the antenna module 2197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 2101 and the external electronic device 2104 via the server 2108 coupled with the second network 2199. The external electronic devices 2102 or 2104 each may be a device of the same or a different type from the electronic device 2101. According to an embodiment, all or some of operations to be executed at the electronic device 2101 may be executed at one or more of the external electronic devices 2102, 2104, or 2108. For example, if the electronic device 2101 should perform a function or a service automatically, or in response to a request from a user or another device, the electronic device 2101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 2101. The electronic device 2101 may provide the outcome, with or without further processing of the outcome, as at least part of a reply to the request. To that end, a cloud computing, distributed computing, mobile edge computing (MEC), or client-server computing technology may be used, for example. The electronic device 2101 may provide ultra low-latency services using, e.g., distributed computing or mobile edge computing. In another embodiment, the external electronic device 2104 may include an Internet-of-things (IoT) device. The server 2108 may be an intelligent server using machine learning and/or a neural network. According to an embodiment, the external electronic device 2104 or the server 2108 may be included in the second network 2199. The electronic device 2101 may be applied to intelligent services (e.g., smart home, smart city, smart car, or healthcare) based on 5G communication technology or IoT-related technology.

According to an embodiment, an electronic device 20 supporting app mirroring may comprise a communication unit 1250 configured to connect a communication channel with a source electronic device 10 by at least one direct communication protocol, a display unit 1210 configured to display each of one or more mirroring images, as a mirroring screen 321, 323, 325, in an allocated mirroring area, and at least one processor 1220 electrically connected to the communication unit 1250 or the display unit 1210, and configured to control the communication unit 1250 or the display unit 1210 to display an app screen mirrored from the source electronic device 10, as the mirroring screen 321, 323, 325.

According to an embodiment, the at least one processor 1220 may control the display unit 1210 to display the mirroring screen 321, 323, 325 using mirroring data 31 received from the source electronic device 10 through the communication unit 1250.

According to an embodiment, the at least one processor 1220 may detect a resize event requesting to change a size of the mirroring screen 321, 323, 325 displayed on the display unit 1210.

According to an embodiment, the at least one processor 1220 may, upon detecting the resize event, obtain at least one of a target resolution or a target DPI for changing the size of the mirroring screen 321, 323, 325.

According to an embodiment, the at least one processor 1220 may receive resized mirroring data 31 to which at least one of the target resolution or the target DPI is applied from the source electronic device 10 through the communication unit 1250.

According to an embodiment, the at least one processor 1220 may control the display unit 1210 to display a resized mirroring screen using the resized mirroring data.

According to an embodiment, the at least one processor 1220 may, upon detecting the resize event as a menu button provided on the mirroring screen 321, 323, 325 is manipulated by a user, obtain at least one of the target resolution or the target DPI by the user manipulating the menu button.

According to an embodiment, the at least one processor 1220 may determine whether it is required to resize the mirroring screen 321, 323, 325 based on the detection of the resize event and a result of comparing the target resolution or the target DPI and a current resolution or a current DPI of the mirroring screen.

According to an embodiment, the at least one processor 1220 may, upon detecting the resize event as the size of the mirroring screen 321, 323, 325 is changed by a user, obtain at least one of the target resolution or the target DPI considering the size of the mirroring screen 321, 323, 325 changed by the user.

According to an embodiment, the at least one processor 1220 may determine whether it is required to resize the mirroring screen 321, 323, 325 based on the detection of the resize event, a change in a display direction of the mirroring screen 321, 323, 325, a variation in the size of the mirroring screen with the changed display direction, or a ratio of the mirroring screen with the changed display direction to an entire display area.

According to an embodiment, the at least one processor 1220 may determine whether it is required to resize the mirroring screen 321, 323, 325 based on the detection of the resize event, and a ratio of a size 1520, 1530, 1540 of the mirroring screen 321, 323, 325 to be changed by resizing to a display screen 1510 exceeding at least one threshold level.

According to an embodiment, the at least one processor 1220 may, upon determining that the resizing is not required, control the display unit 1210 to display a scaled mirroring screen obtained by up- or down-scaling the mirroring image displayed on the mirroring screen 321, 323, 325.

According to an embodiment, the at least one processor 1220 may, upon detecting the resize event, obtain a preset suggested resolution or suggested DPI corresponding to the size of the mirroring screen 321, 323, 325 to be changed by resizing, among preset suggested resolutions or proposed DPIs for each mirroring screen size, as the target resolution or the target DPI.

According to an embodiment, the at least one processor 1220 may transmit size adjustment information indicating at least one of the target resolution or the target DPI to the source electronic device 10 through the communication unit 1250.

According to an embodiment, the size adjustment information may include an app identifier corresponding to the mirroring screen where the resize event is detected.

According to an embodiment, a method for adjusting a size of a mirroring screen in an electronic device 20 may comprise detecting 723, 1023 a resize event requesting to change a size of a mirroring screen 321, 323, 325 displayed using mirroring data 310 received from a source electronic device 10.

According to an embodiment, the method for adjusting the size of the mirroring screen may comprise, upon detecting the resize event, obtain 725, 1027 at least one of a target resolution or a target DPI for changing the size of the mirroring screen 321, 323, 325.

According to an embodiment, the method for adjusting the size of the mirroring screen may comprise receiving 731, 1029 resized mirroring data to which at least one of the target resolution or the target DPI is applied from the source electronic device 10.

According to an embodiment, the method for adjusting the size of the mirroring screen may comprise displaying 733, 1031 a resized mirroring screen using the resized mirroring data.

According to an embodiment, the obtaining 725, 1027 may include, upon detecting the resize event as a menu button provided on the mirroring screen 321, 323, 325 is manipulated by a user, obtaining at least one of the target resolution or the target DPI by the user manipulating the menu button.

According to an embodiment, the method for adjusting the size of the mirroring screen may comprise determining 727, 1027 whether it is required to resize the mirroring screen based on the detection of the resize event and a result of comparing the target resolution or the target DPI and a current resolution or a current DPI of the mirroring screen 321, 323, 325.

According to an embodiment, the obtaining 725, 1027 may include, upon detecting the resize event as the size of the mirroring screen 321, 323, 325 is changed by a user, obtaining at least one of the target resolution or the target DPI considering the size of the mirroring screen changed by the user.

According to an embodiment, the method for adjusting the size of the mirroring screen may comprise determining 727, 1027 whether it is required to resize the mirroring screen based on the detection of the resize event, a change in a display direction of the mirroring screen 321, 323, 325, a variation in the size of the mirroring screen with the changed display direction, or a ratio of the mirroring screen with the changed display direction to an entire display area.

According to an embodiment, the method for adjusting the size of the mirroring screen may comprise determining 727, 1027 whether it is required to resize the mirroring screen 321, 323, 325 based on the detection of the resize event, and a ratio of a size of the mirroring screen 321, 323, 325 to be changed by resizing to a display screen exceeding at least one threshold level.

According to an embodiment, the method for adjusting the size of the mirroring screen may comprise, upon determining that the resizing is not required, displaying 735 & 737, 1033 & 1035 a scaled mirroring screen obtained by up- or down-scaling the mirroring image displayed on the mirroring screen 321, 323, 325.

According to an embodiment, the obtaining 725, 1027 may include, upon detecting the resize event, obtaining a preset suggested resolution or suggested DPI corresponding to the size of the mirroring screen 321, 323, 325 to be changed by resizing, among preset suggested resolutions or proposed DPIs for each mirroring screen size, as the target resolution or the target DPI.

According to an embodiment, the method for adjusting the size of the mirroring screen may comprise transmitting 741, 1025 size adjustment information 33 indicating at least one of the target resolution or the target DPI to the source electronic device 10.

According to an embodiment, the size adjustment information 33 may include an app identifier corresponding to the mirroring screen 321, 323, 325 where the resize event is detected.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2140) including one or more instructions that are stored in a storage medium (e.g., the memory 1140) that is readable by a machine (e.g., the digital device 120). For example, a processor (e.g., the controller 123) of the machine (e.g., the electronic device 120) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (20) supporting application (app) mirroring, comprising:
a communication unit (1250) configured to connect a communication channel with a source electronic device (10) by at least one direct communication protocol;
a display unit configured to display each of one or more mirroring images, as a mirroring screen (321, 323, 325), in an allocated mirroring area; and
at least one processor (1220) electrically connected to the communication unit (1250) or the display unit (1210), and configured to control the communication unit (1250) or the display unit (1210) to display an app screen mirrored from the source electronic device (10), as the mirroring screen (321, 323, 325), wherein the at least one processor is configured to:
control the display unit (1210) to display the mirroring screen (321, 323, 325) using mirroring data (31) received from the source electronic (10) through the communication unit (1250);
detect a resize event requesting to change a size of the mirroring screen (321, 323, 325) displayed on the display unit (1210);
upon detecting the resize event, obtain at least one of a target resolution or a target DPI for changing the size of the mirroring screen (321, 323, 325);
receive resized mirroring data (31) having at least one of the target resolution or the target dot per inch (DPI) from the source electronic device (10) through the communication unit (1250); and
control the display unit (1210) to display a resized mirroring screen using the resized mirroring data.

2. The electronic device of claim 1, wherein the at least one processor (1220) is configured to:
upon detecting the resize event as a menu button provided on the mirroring screen (321, 323, 325) is manipulated by a user, obtain at least one of the target resolution or the target DPI by the user manipulating the menu button; and
determine whether it is required to resize the mirroring screen (321, 323, 325) based on the detection of the resize event and a result of comparing the target resolution or the target DPI and a current resolution or a current DPI of the mirroring screen.

3. The electronic device of claim 1, wherein the at least one processor (1220) is configured to, upon detecting the resize event as the size of the mirroring screen (321, 323, 325) is changed by a user, obtain at least one of the target resolution or the target DPI considering the size of the mirroring screen (321, 323, 325) changed by the user.

4. The electronic device of any one of claims 1 to 3, wherein the at least one processor (1220) is configured to:
determine whether it is required to resize the mirroring screen (321, 323, 325) based on the detection of the resize event, a change in a display direction of the mirroring screen (321, 323, 325), a variation in the size of the mirroring screen with a changed display direction, or a ratio of the mirroring screen with the changed display direction to an entire display area; and
upon determining not to resize the mirroring screen, control the display unit (1210) to display a scaled mirroring screen obtained by up- or down-scaling a mirroring image displayed on the mirroring screen (321, 323, 325).

5. The electronic device of any one of claims 1 to 3, wherein the at least one processor (1220) is configured to:
determine whether it is required to resize the mirroring screen (321, 323, 325) based on the detection of the resize event, and based on a ratio of the size (1520, 1530, 1540) of the mirroring screen (321, 323, 325) to be changed by the resizing to a size of a display screen (1510) exceeding at least one threshold level; and
upon determining not to resize the mirroring screen, control the display unit (1210) to display a scaled mirroring screen obtained by up- or down-scaling a mirroring image displayed on the mirroring screen (321, 323, 325).

6. The electronic device of claim 1, wherein the at least one processor (1220) is configured to, upon detecting the resize event, obtain a preset suggested resolution or suggested DPI corresponding to the size of the mirroring screen (321, 323, 325) to be changed by resizing, among preset suggested resolutions or suggested DPIs for each mirroring screen size, as the target resolution or the target DPI.

7. The electronic device of any one of claims 1 to 6, wherein the at least one processor (1220) is configured to transmit size adjustment information about at least one of the target resolution or the target DPI to the source electronic device (10) through the communication unit (1250), and
wherein the size adjustment information includes an app identifier corresponding to the mirroring screen where for which the resize event is detected.

8. A method for adjusting a size of a mirroring screen in an electronic device (20), the method comprising:
Displaying (721, 1021) a mirroring screen (321, 323, 325) using mirroring data (310) received from a source electronic device (10);
detecting (723,1023) a resize event requesting to change a size of the displayed mirroring screen (321, 323, 325);
upon detecting the resize event, obtaining (725, 1027) at least one of a target resolution or a target dot per inch (DPI) for changing the size of the mirroring screen (321, 323, 325);
receiving (731, 1029) resized mirroring data having at least one of the target resolution or the target DPI from the source electronic device; and
displaying (733, 1031) a resized mirroring screen using the resized mirroring data.

9. The method of claim 8, wherein the obtaining includes, upon detecting the resize event as a menu button provided on the mirroring screen (321, 323, 325) is manipulated by a user, obtaining (725, 1027) at least one of the target resolution or the target DPI by the user manipulating the menu button.

10. The method of claim 9, comprising determining (727, 1027) whether it is required to resize the mirroring screen based on the detection of the resize event and a result of comparing the target resolution or the target DPI and a current resolution or a current DPI of the mirroring screen (321, 323, 325).

11. The method of claim 8, wherein the obtaining (725, 1027) includes, upon detecting the resize event as the size of the mirroring screen is changed by a user, obtaining at least one of the target resolution or the target DPI considering the size of the mirroring screen (321, 323, 325) changed by the user.

12. The method of any one of claims 8 to 11, comprising:
determining (727, 107) whether it is required to resize the mirroring screen based on the detection of the resize event, a change in a display direction of the mirroring screen (321, 323, 325), a variation in the size of the mirroring screen with the changed display direction, or a ratio of the mirroring screen with a changed display direction to an entire display area; and
upon determining not to resize the mirroring screen, displaying (735 & 737, 1033 & 1035) a scaled mirroring screen obtained by up- or down-scaling a mirroring image displayed on the mirroring screen (321, 323, 325).

13. The method of any one of claims 8 to 11, comprising:
Determining (727, 1027) whether it is required to resize the mirroring screen (321, 323, 325) based on the detection of the resize event, and based on a ratio of the size of the mirroring screen (321, 323, 325) to be changed by the resizing to a size of a display screen exceeding at least one threshold level; and
upon determining not to resize the mirroring screen, displaying ( 735 & 737, 1033 & 1035) a scaled mirroring screen obtained by up- or down-scaling a mirroring image displayed on the mirroring screen (321, 323, 325).

14. The method of claim 8, wherein the obtaining (725, 1027) includes, upon detecting the resize event, obtaining a preset suggested resolution or suggested DPI corresponding to the size of the mirroring screen (321, 323, 325) to be changed by resizing, among preset suggested resolutions or suggested DPIs for each mirroring screen size, as the target resolution or the target DPI.

15. The method of any one of claims 8 to 14, comprising transmitting (741, 1025) size adjustment information (33) about at least one of the target resolution or the target DPI to the source electronic device (10),
wherein the size adjustment information (33) includes an app identifier corresponding to the mirroring screen (321, 323, 325) where for which the resize event is detected.
